# EUROPÄISCHE PATENTANMELDUNG

(11) **EP 0 908 990 A2**
(43) Veröffentlichungstag der Anmeldung: **14.04.1999**
(21) Anmeldenummer: 98118727.1
(22) Anmeldetag: 04.10.1998
(51) Int. Cl.: H02G 3/00

(54) **Informations- und Kommunikationseinrichtung**

(30) Priorität: 05.10.1997 DE 29717647 U
(71) Anmelder: HEWI Heinrich Wilke GmbH, 34454 Bad Arolsen (DE)
(72) Erfinder: Hoffmann, Mathias, 30459 Hannover (DE); Steiner, Olaf, 30938 Burgwinkel (DE); Spandau, Kai, 30177 Hannover (DE)
(74) Vertreter: Freiherr von Schorlemer, Reinfried, Dipl.-Phys.

(57) **Zusammenfassung**

Die Erfindung betrifft eine Informations- und Kommunikationseinrichtung für Gebäude. Diese enthält eine Unterkonstruktion zur Montage wenigstens einer in einer ersten Spalte angeordneten Namensleiste (31) und einer Mehrzahl von Bedienelementen (4) für Schaltorgane (23) von Klingel-, Ruf- oder Lichtanlagen od. dgl. sowie eine zur Abdeckung der Namensleiste (31) bestimmte, transparente Scheibe (1). Die Bedienelemente (4) sind sind in einer zur ersten Spalte parallelen, zweiten Spalte und in Spaltenrichtung hintereinander liegend angeordnet und an ausgewählten Orten innerhalb der zweiten Spalte wahlweise montierbar. Zum Auffüllen von zwischen den Bedienelementen (4) und/oder diesen und den Enden der Unterkonstruktion verbleibenden Zwischenräumen sind Blenden (5,7) einsetzbar und derart an der Unterkonstruktion montierbar, daß sie und die Bedienelemente (4) die Vorderseite eines durchgehenden, an die Scheibe (1) grenzenden Funktionsbalkens (2) bilden.

## Beschreibung

Die Erfindung betrifft eine Informations- und Kommunikationseinrichtung der im Oberbegriff des Anspruchs 1 angegebenen Gattung.

Informations- und Kommunikationseinrichtungen dieser Art dienen vor allem an Wohn- und Geschäftshäusern als Klingelanlagen und sind je nach Wunsch mit wenigstens einem Namens- und Klingelmodul und ggf. mit wenigstens einem weiteren Modul in Form eines Wechselsprech-, Kamera-, Bewegungsmelder- und/oder Chiplesemoduls versehen, um nur einige der insgesamt verfügbaren Zusatzmodule zu nennen. Dabei ist es allgemein üblich, die Einrichtung mit einer Unterkonstruktion in Form eines Gehäuses oder Rahmens derart zu versehen, daß in eine gegebene Unterkonstruktion nur eine vorgewählte Anzahl von vorgefertigten und in ihrer Größe vorbestimmten, an Trägern befestigten Modulen eingesetzt werden kann (DE 27 11 324 C2, DE 40 09 189 C2, DE 31 08 056 C3). Die einzelnen Module werden dabei meistens in entsprechend geformte Rasteröffnungen eingesetzt, die in einer als Rasterrahmen ausgebildeten Frontplatte der Unterkonstruktion vorgesehen und durch Blenden in Form von fest mit dem Rasterrahmen verbundenen Stegen gegeneinander abgeteilt sind. Dem Vorteil, daß die komplett vorgefertigten Module lediglich in die Rasteröffnungen gesteckt werden brauchen und dann funkionsbereit sind, stehen die Nachteile gegenüber, daß sich eine komplizierte Bauweise ergibt und die konstruktionsbedingt vorgegebene, starre Rasterform nicht in Abhängigkeit vom Kundenwunsch beliebig verändert werden kann. In optischer Hinsicht wird außerdem häufig als störend empfunden, daß die sichtbare Oberfläche der Einrichtung nicht nur als Ganzes von einem Rahmen der Unterkonstruktion bzw. des Gehäuses umgeben, sondern zusätzlich auch noch in eine Vielzahl von einzelnen Rasterfeldern unterteilt ist, die ihrerseits von rahmenartig angeordneten Blendenleisten umgeben sind, wodurch die sichtbare Oberfläche unruhig wirkt.

Daneben sind Einrichtungen der eingangs bezeichneten Gattung bekannt, die mit wenigstens einem Namens- und Klingelmodul bestückt werden können, der eine aus Klingeltasten gebildete Funktionsleiste und eine parallel zu dieser angeordnete, mit einer transparenten Scheibe abgedeckte Namensleiste enthält. Der Modul ist für eine bestimmte maximale Anzahl von z.B. vier Klingeltasten und ihnen zugeordneten Namen ausgelegt und insgesamt von einem Frontrahmen umgeben. Dabei ergibt sich zwar der durch spezielle konstruktive Maßnahmen erzielte Vorteil, daß innerhalb desselben Moduls wahlweise ein, zwei, drei oder vier Klingeltasten und entsprechend viele Namen vorgesehen werden können. Auch bei dieser Anordnung muß aber die Größe der Klingeltasten als Vielfaches von einem vorgegebenen Rastermaß gewählt werden, so daß dasselbe auch für die Größe der den Klingeltasten zugeordneten Namensfelder gilt. Außerdem stellen die Module keine für sich funktionsfähigen Einheiten dar, weil die zum Betrieb der Einrichtung erforderlichen Leitungen und dergleichen teils im jeweiligen Modul und teils in den die Module aufnehmenden Unterkonstruktionen bzw. Gehäusen untergebracht sind.

Demgegenüber liegt der Erfindung die Aufgabe zugrunde, eine Informations- und Kommunikationseinrichtung der eingangs beschriebenen Art vorzuschlagen, die eine weitgehend geschlossene Oberfläche ohne zusätzliche Rahmenteile aufweist, einen vergleichsweise einfachen Aufbau besitzt und leicht an unterschiedliche Verhältnisse angepaßt werden kann.

Zur Lösung dieser Aufgabe dienen die kennzeichnenden Merkmale des Anspruchs 1.

Die Erfindung bringt insbesondere den Vorteil mit sich, daß innerhalb des aus den Bedienelementen und Blenden gebildeten Funktionsbalkens die Größen und/oder die Lagen der einzelnen Bedienelemente weitgehend frei und unabhängig von einem Grundraster wählbar sind. Etwa zwischen den Bedienelementen verbleibende Zwischenräume werden durch entsprechend lang bemessene Blendenteile ausgefüllt. Daher kann auch die Größe der einzelnen Namensfelder, in Längsrichtung der Namensleiste gemessen, weitgehend beliebig gewählt werden, was insbesondere für kombinierte Wohn- und Geschäftshäuser vorteilhaft ist, bei denen für Firmen in der Regel größere Namensfelder als für Privatpersonen benötigt werden. Innerhalb einer Informations- und Kommunikationseinrichtung gegebener Größe ist daher die Gestaltung der Namensfelder und der ihnen zugeordneten Bedienelemente stets an den individuellen Kundenwunsch anpaßbar. Dennoch ist die erfindungsgemäße Einrichtung mit vergleichsweise einfachen konstruktiven Mitteln realisierbar, weil die Blenden durch Ablängen aus in großen Längen produzierten Profilen erhalten und daher leicht dem Einzelfall angepaßt werden können.

Weitere vorteilhafte Merkmale der Erfindungen ergeben sich aus den Unteransprüchen.

Die Erfindung wird nachfolgend an Ausführungsbeispielen näher erläutert, die in den beiliegenden Zeichnungen in unterschiedlichen Maßstäben dargestellt sind. Es zeigen:
Fig. 1 die Vorderansicht einer erfindungsgemäßen Informations- und Kommunikationseinrichtung;
Fig. 2 einen Schnitt längs der Linie II-II der Fig. 1;
Fig. 3 in einer perspektivischen und auseinandergezogenen Darstellung eine beispielhafte Ausbildung und Anordnung von Einzelteilen der Einrichtung nach Fig. 1;
Fig. 4 die Vorderansicht eines Trägers der Einrichtung nach Fig. 1 bis 3;
Fig. 5 und 6 je einen Schnitt durch den Träger längs der Linien V-V und VI-VI der Fig. 4, jedoch mit aufgesetzten Bauelementen;
Fig. 7 und 8 je eine perspektivische Ansicht von einzelnen, auf dem Träger zu montierenden Bauelementen in einem gegenüber Figuren 4 bis 6 stark vergrößerten Maßstab;
Fig. 9 bis 11 je eine Vorderansicht, Unteransicht und Draufsicht einer oberen Abdeckkappe der Einrichtung nach Fig. 3;
Fig. 12 bis 17 in den Figuren 1 und 2 entsprechendnen Ansichten drei weitere Ausführungsbeispiele der erfindungsgemäßen Infomations- und Kommunikationseinrichtung;
Fig. 18 eine Einzelheit der Einrichtung nach Fig. 16 und 17 in einem stark vergrößerten Maßstab und in einem der Fig. 17 ähnlichen Schnitt, jedoch im Bereich eines Schließzylinders;
Fig. 19 und 20 in je einer der Fig. 2 entsprechenden Ansicht zwei Einbaubeispiele für die Informations- und Kommunikationseinrichtung nach Fig. 1 und 2;
Fig. 21 in einer der Fig. 2 entsprechenden Ansicht eine weitere Ausführungsform der Erfindung;
Fig. 22 und 23 in den Fig. 1 und 2 entsprechenden Ansichten eine weitere Ausführungsform der erfindungsgemäßen Einrichtung;
Fig. 24 und 25 je eine Vorderansicht von zwei weiteren Ausführungsformen der Erfindung;
Fig. 26 einen Schnitt längs der Linie XXVI-XXVI der Fig. 25;
Fig. 27 und 28 eine weitere, insbesondere zur Anwendung in Fahrstühlen geeignete Ausführungsform der erfindungsgemäßen Informations- und Kommunikationseinrichtung;
Fig. 29 eine der Fig. 1 entsprechende Ansicht einer weiteren bevorzugten Ausführungsform der Erfindung;
Fig. 30 und 31 Schnitte längs der Linien XXX-XXX und XXXI-XXXI der Fig. 29;
Fig. 32 in einer perspektivischen und auseinandergezogenen Darstellung eine beispielhafte Ausbildung und Anordnung von Einzelteilen der Einrichtung nach Fig. 29;
Fig. 33 eine Draufsicht auf einen Funktionsbalken der Einrichtung nach Fig. 29;
Fig. 34 einen Querschnitt durch den Funktionsbalken nach Fig. 33, wobei die verschiedenen Teile in einer auseinandergezogenen Anordnung dargestellt sind;
Fig. 35 eine Durchsicht durch die Einrichtung nach Fig. 29 bis 34 von der Rückseite her mit allen Linien der Einzelteile;
Fig. 36 und 37 Schnitte längs der Linien XXXVI-XXXVI und XXXVII-XXXVII der Fig. 35 in unterschiedlichen Betriebsstellungen; und
Fig. 38 eine schematische, perspektivische Ansicht der Einrichtung nach Fig. 29 bis 37 zur Darstellung ihrer Handhabung.

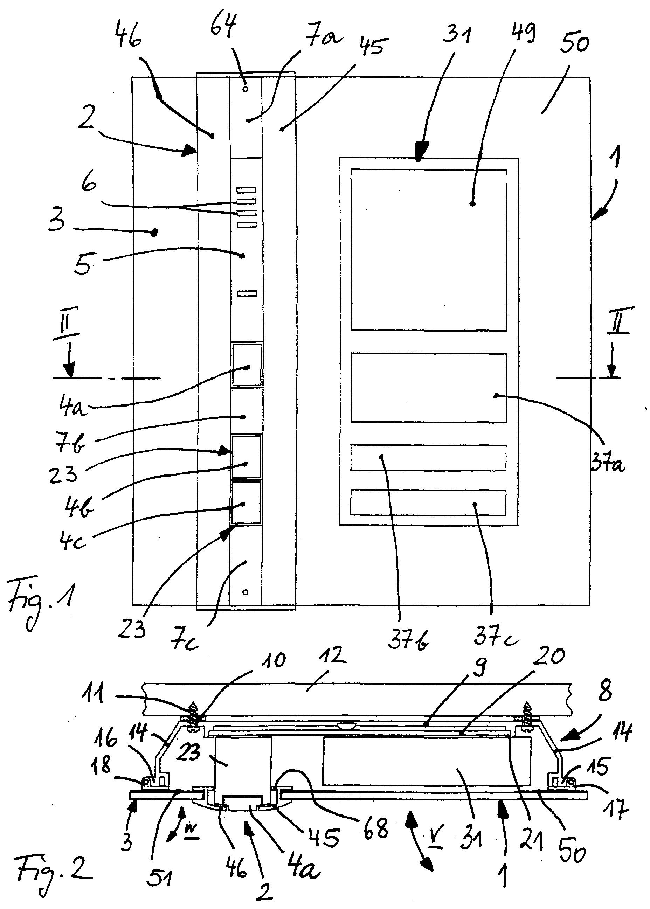

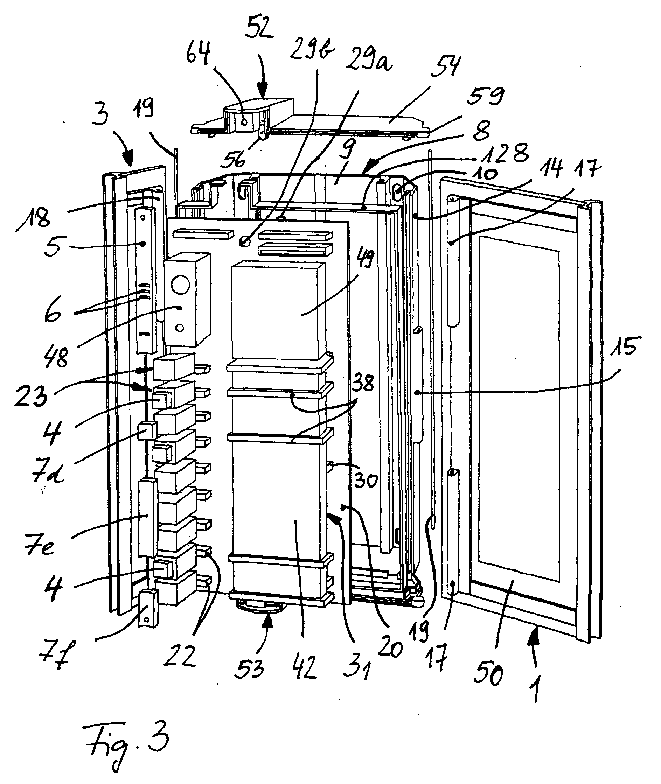

Nach Fig. 1 und 2 enthält eine erfindungsgemäße Informations- und Kommunikationseinrichtung auf der Vorderseite eine vorzugsweise rechteckige, planparallele Scheibe 1 aus einem transparenten Material wie z. B. Glas oder einem Kunststoff, an deren eine, hier im Einbauzustand vertikale Längsseite die eine Längsseite eines ebenfalls rechteckigen Funktionsbalkens 2 grenzt, der mit seiner anderen Seite von der Längsseite eines Schmuckpaneels 3 begrenzt wird. Die in vertikaler Richtung gemessenen Längen der drei Teile 1, 2 und 3 sind im wesentlichen identisch, so daß die gesamte Einrichtung eine insgesamt rechteckige oder quadratische Form besitzt. Dabei kann das Schmuckpaneel 3 aus demselben Material wie die Scheibe 1 bestehen.

Der Funktionsbalken 2 weist in einem mittleren Abschnitt mehrere übereinander liegende Bedienelemente 4a, 4b und 4c für Klingeltasten od. dgl. auf. An das oberste Bedienelement 4a schließt sich eine Blende 5 mit einer der Breite der Bedienelemente 4 entsprechenden Breite an, in der mehrere Schlitze 6 ausgebildet sind. Die freibleibenden Zwischenräume zwischen den Bedienelementen 4, der Blende 5 und dem oberen bzw. unteren Ende des Funktionsbalkens 2 sind durch weitere Blenden 7a, 7b und 7c ausgefüllt, so daß zwischen den Bedienelementen 4 und den Blenden 5, 7 nur schmale Stoßfugen verbleiben. Die Oberflächen der Blenden 5, 7 und der Bedienelemente 4 sind vorzugsweise im wesentlichen identisch und gegebenenfalls leicht konvex derart gewölbt, daß sie entsprechend Fig. 2 etwas über die in einer Ebene liegenden Oberflächen der Scheibe 1 und des Schmuckpaneels 3 vorstehen.

Wie insbesondere Fig. 2 und 3 zeigen, sind die Scheibe 1 und das Schmuckpaneel 3 an einer Unterkonstruktion 8 befestigt, die im Ausführungsbeispiel einen U-förmigen Querschnitt besitzt und zur Rückseite hin als planparallele Grundplatte 9 ausgebildet ist, die Schraublöcher 10 aufweist und mit diese durchragenden Befestigungsschrauben 11 an einer in Fig. 2 schematisch angedeuteten, z.B. in der Nähe des Eingangs eines Gebäudes befindlichen Wand 12 befestigt wird.

An zwei nach vorn ragendenden Stegen 14 der Unterkonstruktion 8 sind Scharnierteile 15, 16 befestigt, die mit entsprechenden Scharnierteilen 17, 18 zusammenwirken, die einerseits an der Rückseite der Scheibe 1 und im Bereich von deren vom Funktionsbalken 2 entfernten Längsseite und andererseits an der Rückseite des Schmuckpaneels 3 und ebenfalls an dessen vom Funktionsbalken 2 entfernten Längsseite befestigt sind. Im Ausführungsbeispiel sind die Scharnierteile 15, 17 bzw. 16, 18 als koaxial angeordnete und durch je eine Scharnierachse 19 durchragte Scharnierhülsen ausgebildet, obwohl statt dessen auch andere Einrichtungen, insbesondere übliche Türbänder vorgesehen werden können. Die Scheibe 1 und das Schmuckpaneel 3 sind mit Hilfe der Scharnierteile 15 bis 18 und der parallel zu deren Längsseiten angeordneten Scharnierachsen 19 derart schwenkbar an der Unterkonstruktion 8 aufgehängt, daß sie in Richtung von Doppelpfeilen v und w (Fig. 2) aus einer Schließstellung, in der sie parallel zur Grundplatte 9 bzw. Wand 12 angeordnet sind, in eine geöffnete Stellung geschwenkt werden können, wobei die Schwenkachsen parallel zueinander und parallel zu den Stegen 14 der Unterkonstruktion 8 angeordnet sind. In der Schließstelluug bleibt zwischen der Scheibe 1 und dem Schmuckpaneel 3 ein zur Aufnahme des Funktionsbalkens 2 bestimmter Spalt frei, wie weiter unten erläutert ist.

Zur Aufnahme und Montage der Bedienelemente 4 innerhalb der Einrichtung nach Fig. 1 bis 3 dient ein Träger 20, der vorzugsweise als planparallele Platte ausgebildet ist und einen rechteckigen Querschnitt besitzt, der etwas kleiner ist, als dem ebenfalls rechteckigen Querschnitt der Grundplatte 9 entspricht. Der Träger 20 kann von oben her in die U-förmige Unterkonstruktion 8 eingeschoben werden, wobei seine Längswände und ihnen zugeordnete, in den Stegen 14 ausgebildete Nuten 21 (Fig. 2) als zusammenwirkende Führungen und Haltemittel dienen.

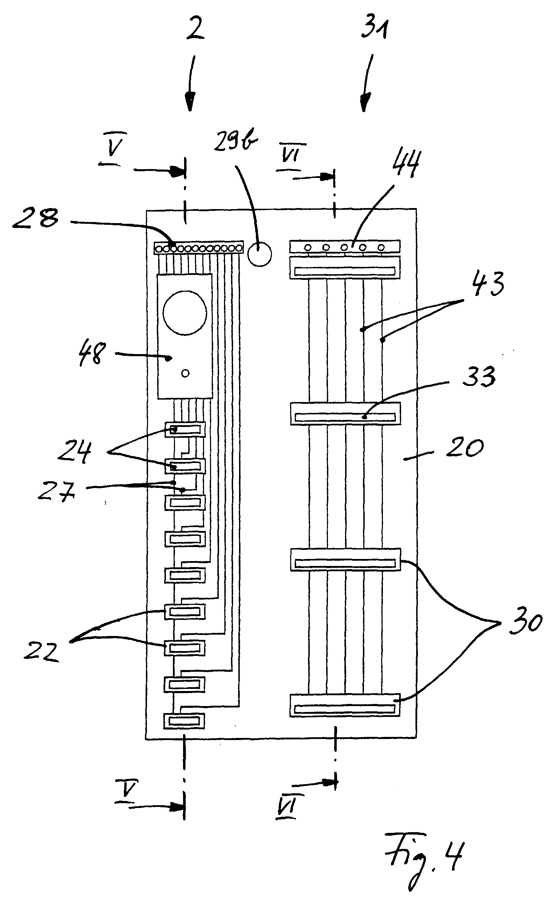

Wie insbesondere Fig. 3 bis 6 zeigen, ist in einer Spalte des Trägers 20, die dem Funktionsbalken 2 und dem Spalt zwischen der Scheibe 1 und dem Schmuckpaneel 3 zugeordnet ist, eine Vielzahl von Befestigungs- bzw. Aufnahmemitteln 22 angebracht, die in Spaltenrichtung hinter- bzw. im Ausführungsbeispiel übereinander angeordnet sind und die Befestigung von Schaltorganen 23 in Form von Tastschaltern od. dgl. ermöglichen, die an ihren vom Träger 20 nach vorn gerichteten Enden z.B. mit federnd eindrückbaren, mit Hilfe der Bedienelemente 4 zu betätigenden Tasten od. dgl. versehen sind (vgl. auch Fig. 7),wie dies bei Schaltorganen für übliche Klingel-, Ruf- und/oder Lichtanlagen von Wohn- oder Geschäftshäusern allgemein bekannt ist. Im Ausführungsbeispiel sind die Befestigungsmittel 22 als Steckelemente mit Aussparungen 24 (Fig. 4) ausgebildet, auf welche die Schaltorgane 23 mit an ihren Rückseiten befestigten Steckzapfen 25 mit Klemmsitz aufgesteckt werden können. Außer den Schaltorganen 23 sind Leerklötze 26 vorhanden, die dieselbe Form und Größe wie die Schaltorgane 23 aufweisen, ebenfalls mit den Steckzapfen 25 versehen sind und daher auf von den Schaltorganen 23 nicht besetzte Befestigungsmittel 22 aufgesteckt werden können. Zur Stromversorgung der Schaltorgane 23 dienen Leiterbahnen 27 (Fig. 4), die zu einer Anschlußklemme 28 geführt sind, die über ein nicht dargestelltes und durch Öffnungen 29a, 29b (Fig. 3) in der Grundplatte 9 und dem Träger 20 geführtes Kabel in üblicher Weise zur Stromversorgung und/oder Steuerung verwendet werden können.

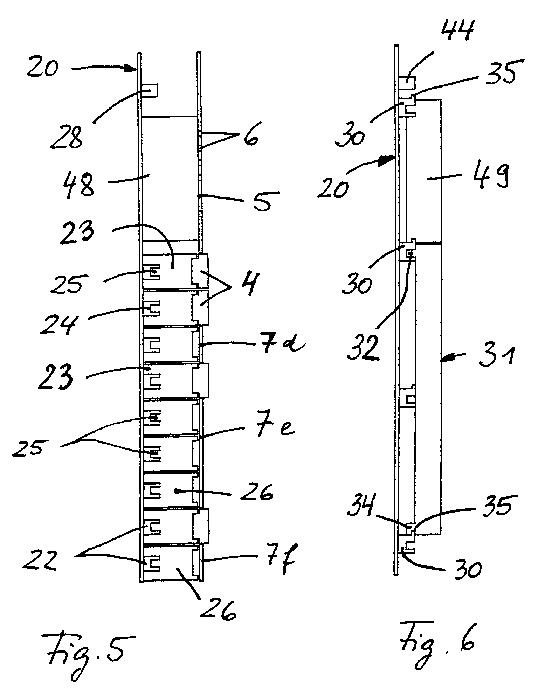

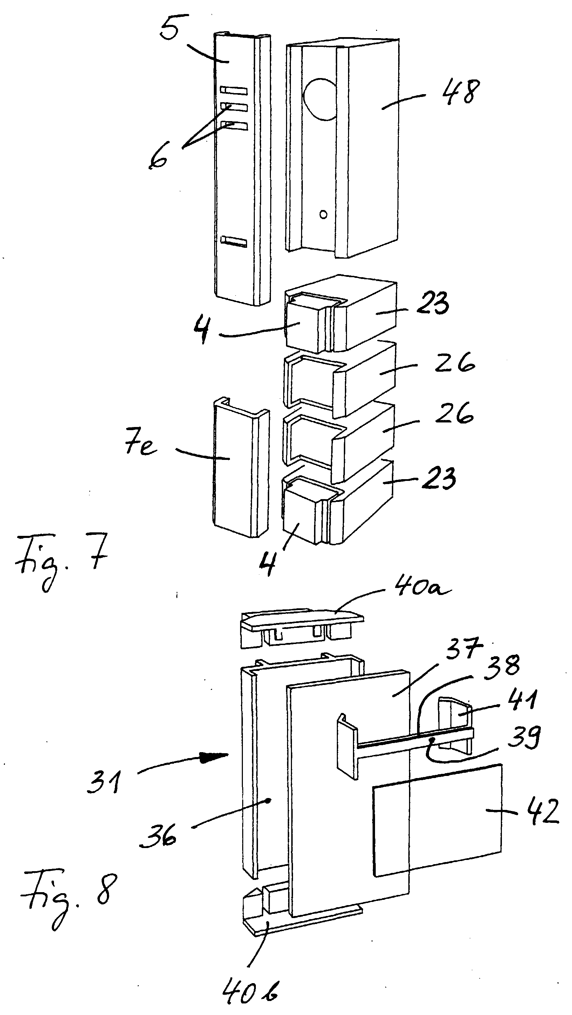

In einer weiteren, zur ersten Spalte parallelen und der Scheibe 1 zugeordneten Spalte weist der Träger 20 eine Vielzahl von weiteren Befestigungs- bzw. Aufnahmemitteln 30 auf, die in Spaltenrichtung hinter- bzw. hier übereinander angeordnet sind und zur Bildung bzw. Montage der Elemente einer Namensleiste 31 (Fig. 4 und 6) dienen, die sich wie die Funktionsleiste 13 vorzugsweise über den gesamten mit Befestigungsmitteln 22 versehenen Höhenabschnitt des Trägers 20 erstreckt. Die Namensleiste 31 weist z.B. an ihrer Rückseite und in einem oberen Bereich wenigstens einen vorstehenden Steckzapfen 32 auf, der mit Klemmsitz in entsprechend geformte Aussparungen 33 der Befestigungsmittel 30 einsetzbar ist, und ist am unteren Ende vorzugsweise mit einem hinter einen Vorsprung 35 der Befestigungsmittel 30 einrastbaren Haken 34 versehen. Nach Fig. 8 ist die Namensleiste 31 z.B. aus einer U-förmigen Tragplatte 36, einem dieser aufliegenden Leuchtmittel 37 und wenigstens zwei die Tragplatte 36 und das Leuchtmittel 37 umgreifenden, Aufnahmenuten 38 aufweisenden Trägerrahmen 39 zusammengesetzt und durch zwei am oberen bzw. unteren Ende der Tragplatte 36 befestigte Abschlußkappen 40a, 40b zu einer stabilen Baueinheit verbunden, die an ihrer Rückseite mit den in Fig. 8 nicht dargestellten Steckzapfen 32 und dem Haken 34 versehen sein kann. Die Tragplatte 36 ist rechteckförmig und wird von seitlichen Armen 41 der Trägerrahmen 39 derart umgriffen, daß letztere parallel zu den Längsseiten der Tragplatte 36 verschoben werden können, um zwischen sich in die Aufnahmenuten 38 eingeführte Namensschilder 42 oder andere Informationsflächen aufzunehmen. Das Leuchtmittel 37 kann über eine Leiterbahn 43 (Fig. 4) mit einer auf dem Träger 20 befestigten Anschlußklemme 44 verbunden werden, die ebenfalls von einem durch die Öffnungen 29a und 29b zugeführten Kabel gespeist wird.

Wie insbesondere Fig. 2 zeigt, ist an den Unterseiten der einander gegenüberliegenden Längsseiten der Scheibe 1 und des Schmuckpaneels 3 jeweils ein Profil 45 bzw. 46 z.B. durch Kleben befestigt. Die beiden Profile 45, 46 sind parallel und vorzugsweise spiegelbildlich angeordnet, damit sie identisch ausgebildet sein können, und so voneinander beabstandet, daß sie im Schließzustand zwischen sich einen schmalen, parallel zu den Scharnierachsen 19 verlaufenden Spalt begrenzen, dessen Breite kleiner als die Breite der Bedienelemente 4 ist. Dabei ist der Abstand zwischen der Scheibe 1 und dem Schmuckpaneel 3 so gewählt, daß sich die an den Spalt grenzenden Längsränder der Profile 45, 46 im Schließzustand zwar von außen bzw. von vorn an die Seitenkanten der Bedienelemente 4 anlegen (vgl. Fig. 2) und diese abdecken, aber für den Gebrauch bzw. zur Einwirkung auf die Schaltorgane 23 zugänglich sind.

Die mit der bisher beschriebenen Einrichtung erzielbaren Vorteile ergeben sich insbesondere aus Fig. 1 in Verbindung mit Fig. 3 bis 6. Auf der von der Scheibe 1 abgedeckten Namensleiste 31 können übereinander an praktisch beliebigen Stellen Namen angebracht werden, ohne daß eine Bindung an ein vorgegebenes Rastermaß erforderlich ist. Je nach Anbringung der Namen können dann die Bedienelemente 4 dort angeordnet werden, wo es sinnvoll ist, und irgendeinem der Schaltorgane 23 zugeordnet werden. In Fig. 1 sind z.B. drei Namensfelder 37a, 37b und 37c benutzt, denen im Funktionbalken 2 je eines der Bedienelemente 4a, 4b bzw. 4c zugeordnet ist.

Zwischen den auf diese Weise zugeordneten Bedienelementen 4 frei bleibende Abschnitte des Funktionsbalkens 2 werden entsprechend Fig. 5 z.B. mit den Leerklötzen 26 besetzt, auf deren äußere Oberflächen dann jeweils eine der Blenden 7a bis 7c aufgelegt wird, die im Schließzustand der Scheibe 1 und des Schmuckpaneels 3 wie die Bedienelemente 4 von den Profilen 45, 46 erfaßt und in Position gehalten werden. Dabei versteht sich, daß in Fig. 3 und 5 beispielhaft Bedienelemente 4 und Blenden 7d, 7e und 7f dargestellt sind, die im Vergleich zu Fig. 1 andere Positionen einnehmen. Außerdem sind die Längen der Blenden 7 beliebig wählbar und an die Abstände zwischen den Schaltorganen 23 anpaßbar.

Nach einer besonders bevorzugten, aus Fig. 1 bis 6 ersichtlichen Ausführungsform der Erfindung ist der in Fig. 1 gezeigten Blende 5 ein Gegensprechmodul 48 (Fig. 3 bis 5) zugeordnet, das den Schlitzen 6 zugeordnete Mikrofon- und Lautsprechereinheiten aufweist. Die Blende 5 wird z.B. auf das Gegensprechmodul 48 aufgeclipst und im geschlossenen Zustand der Scheibe 1 und des Schmuckpaneels 3 in derselben Weise wie die Blenden 7 von den Profilen 45, 46 in Position gehalten. Das Gegensprechmodul 48 kann im übrigen über die Leiterbahnen 27 (Fig. 4) ebenfalls an die Anschlußklemme 28 angeschlossen sein.

In entsprechender Weise können dem Funktionsbalken 2 weitere Bedienelemente wie Licht- oder Ruftasten od.dgl. zugeordnet werden. Dabei nimmt der Funktionsbalken 2 vorzugsweise alle aktiven Bauelemente der Informations- und Kommunikationseinrichtung auf, d.h. alle solchen Bauelemente, die einen direkten Zugriff erfordern, sei es in Form einer mechanischen Betätigung oder sei es in Form von durch Öffnungen tretenden Schallwellen.

Dagegen nimmt die Namensleiste 31 zusätzlich zu den Namensschildern 42 vorzugsweise auch alle anderen passiven Bauelemente auf, unter denen solche Bauelemente verstanden werden, die keinen direkten Zugriff erfordern. Dazu zählen insbesondere Leucht-, Kamera-, Bewegungsmelder-, Uhr-, Spiegel- oder Chiplesemodule, für die es genügt, daß sie durch die transparente Scheibe 1 hindurch sichtbar sind bzw. wirksam werden können. In Fig. 3 und 6 ist ein derartiges, z.B. als Videokamera ausgebildetes Modul 49 beispielhaft dargestellt. Das Modul 49 kann z.B. mittels der Leitungen 43 mit der Anschlußklemme 44 verbunden sein.

Ein weiterer wesentlicher Vorteil der Erfindung besteht darin, daß alle beschriebenen Schaltorgane 23, Namensleisten 31 und sonstigen Module 48, 49 auf dem Träger 20 montiert sind, der auch mit allen für den elektrischen Betrieb der verschiedenen Bauelemente benötigten Leitungen usw. versehen ist. Der Träger 20 mit den Bauelementen ist daher ein als Ganzes funktionsfähiges Bauteil, das nur noch in die Unterkonstruktion 8 eingesetzt und mit dieser an der Wand 12 befestigt werden braucht.

Ein weiterer wesentlicher Vorteil der Erfindung ergibt sich schließlich aus der Ausbildung der Teile 5, 7, 8, 35, 45 und 46 einerseits und 1, 3, 20, 36 und 42 andererseits. Die zuerst genannten Teile bestehen vorzugsweise aus in Längsrichtung verlaufenden Profilen, die in großen Längen durch Strangpressen oder Extrudieren hergestellt und auf die im Einzelfall gewünschte Länge geschnitten werden können. Dagegen können die anderen genannten Teile aus groß dimensionierten Tafeln oder Platten zugeschnitten werden, so daß unabhängig von der Größe der veschiedenen Teile stets dieselben Werkzeuge verwendet werden können. Die gesamte Informations- und Kommunikationseinrichtung kann auf diese Weise leicht an spezielle Kundenwünsche angepaßt werden.

Die Scheibe 1 kann auf ihrer Innenseite mit einer um die Namensleiste 31 herumlaufenden, undurchsichtigen Maske 50 (Fig. 2, 3) versehen sein, um auf dem Träger 20 oder sonstwo befindliche Teile abzudecken, die nicht sichtbar sein sollen, z.B. die Scharnierteile 15 und 17. Aus demselben Grund kann die Rückseite des Schmuckpanels 3 mit einer undurchsichtigen Maske 51 versehen oder von innen her vollständig z.B. mit einer schmückenden Maskierung versehen sein.

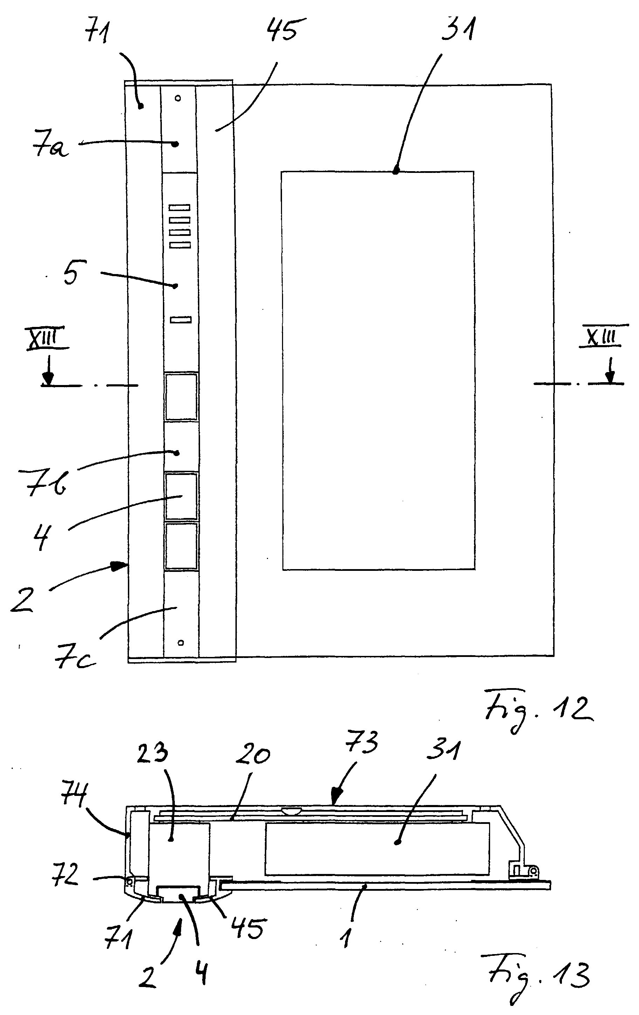

Schließlich werden die oberen und unteren Enden der Unterkonstruktion nach dem Zusammenbau der verschiedenen Teile zweckmäßig mit je einer oberen und unteren, insbesondere aus Fig. 3 und 9 bis 11 ersichtlichen Abdeckkappe 52, 53 abgedeckt. Da beide Abdeckkappen 52, 53 spiegelbildlich, im übrigen aber identisch ausgebildet werden können, wird nachfolgend nur die obere Abdeckkappe 52 näher erläutert.

Die Abdeckkappe 52 wird von oben auf die Unterkonstruktion 8 aufgeschoben, nachdem der Träger 20 in diese eingesetzt wurde, um ihn gegen ein Herausziehen in dieser Richtung zu sichern. Hierzu weist die Abdeckkappe 52 eine als oberer Abschluß dienende Platte 54 auf, deren Außenkontur etwa der Querschnittsfläche der Informations- und Kommunikationseinrichtung im zusammengebauten Zustand entspricht. Von dieser Platte 54 ragen Stegabschnitte 55 nach unten, die sich beim Aufschieben der Abdeckkappe 52 auf die Unterkonstruktion 8 an die Innenseiten der Grundplatte 9 und zweckmäßig auch der Stege 14 anlegen. Außerdem ragen vom Hinterende der Platte 54 in einem der Dicke der Grundplatte 9 entsprechenden Abstand zu den Stegabschnitten 55 zwei Arretierungslaschen 56 nach unten, die sich von außen an die Grundplatte 9 anlegen und zu dieser hin vorstehende Ansätze 57 mit dem Innenquerschnitt der Schraublöcher 10 entsprechenden Außenquerschnitten aufweisen. Beim Aufschieben der Abdeckplatte 52 auf die Unterkonstruktion 8 werden die Arretierungslaschen 56 elastisch etwas nach außen gebogen, bis die Ansätze 57 in die Schraublöcher 10 einschnappen und die Abdeckkappe 52 dadurch an der Unterkonstruktion 8 festlegen. In diesem Fall weisen die Ansätze 57 von den Befestigungsschrauben 11 durchragte Schraublöcher 58 auf. Außerdem weist die Platte 54 seitliche Ansätze 59 auf, die im montierten Zustand der Abdeckkappe 52 unmittelbar über den oberen Enden der Scharnierachsen 19 liegen und deren Herausnahme oder Heraustutschen verhindern.

Die Abdeckkappe 52 ist schließlich mit einem Verriegelungsmechanismus 60 versehen, der verhindert, daß die Scheibe 1 und/oder das Schmuckpaneel 3 von Unbefugten in eine geöffnete Stellung geschwenkt werden kann. Der Verriegelungsmechanismus 60 weist einen Aufnahmekörper 61 auf, der in derselben Weise über die Abdeckkappe 52 nach vorn vorsteht, wie dies oben in Verbindung mit den Bedienelementen 4 und den Blenden 5 und 7 (Fig. 1 bis 3) erläutert wurde. Der Aufnahmekörper 61 ist im montierten Zustand der Abdeckkappe 52 außerdem so positioniert, daß er genau unter der Blende 7a (Fig. 1) zu liegen kommt und sich die Profile 45, 46 auch auf ihn auflegen.

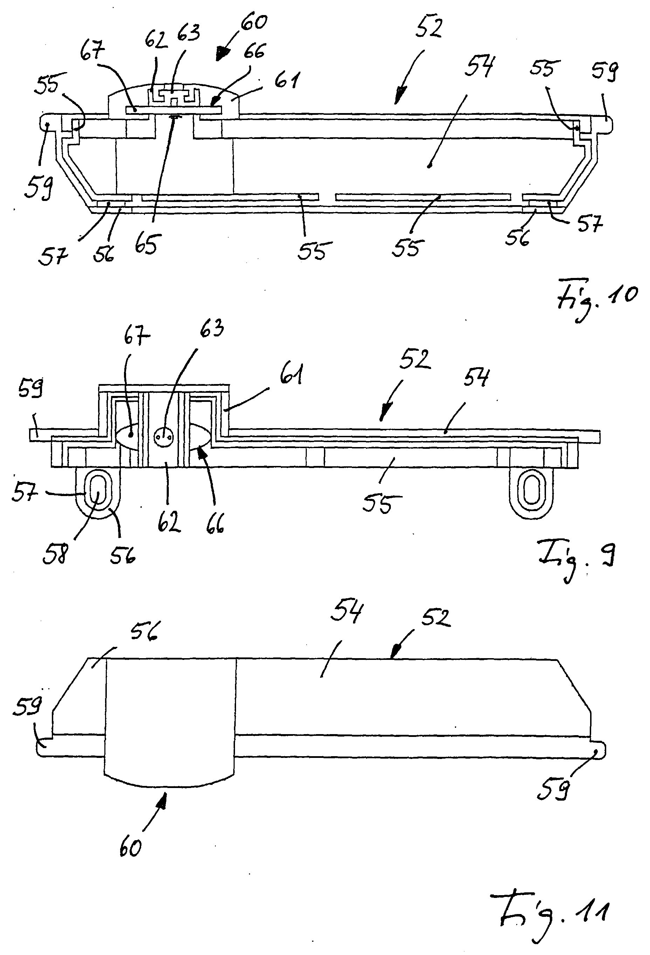

In einem mittleren Teil des Aufnahmekörpers 61 ist eine Aufnahmeöffnung 62 vorgesehen, in die ein Schließzylinder 63 eingesetzt ist, dessen Vorderseite eine durch die Profile 45, 46 und ein Loch 64 (vgl. auch Fig. 1) der Blende 7a hindurch zugängliche Schlüsselaufnahme aufweist. Der Schließzylinder 63 ist an seiner Rückseite mit einem Ansatz versehen, auf den eine exzentrische und mittels eines Sicherungsrings 65 gesicherte Schließplatte 66 drehfest befestigt ist. In einer Freigabestellung der Schließplatte 66 liegen deren exzentrischen Enden 67 im Spalt zwischen den Profilen 45 und 46, so daß die Scheibe 1 und/oder das Schmuckpaneel 3 nach vorn geschwenkt werden kann, um Zugang zum Innenraum der Einrichtung zu erhalten und ggf. die Verriegelungslaschen 56 aus den Schraublöchern 10 herauszudrücken, wenn eine Abnahme der Abdeckkappe 52 erwünscht ist. In einer mittels eines Schlüssels herbeigeführten Schließstellung des Zylinders 63 befindet sich die Schließplatte 66 dagegen in der aus Fig. 9 und 10 ersichtlichen Stellung, in der die beiden exzentrischen, seitlich abstehenden Enden 67 der Schließplatte 66 hinter zwei aus Fig. 2 ersichtlichen Sperrnasen 68 der Profile 45, 46 stehen und dadurch ein unbefugtes Verschwenken der Scheibe 1 und/oder des Schmuckpaneels 3 nach vorn unmöglich machen.

Die untere Abdeckkappe 53 ist zweckmäßig entsprechend, jedoch spiegelsymetrisch ausgebildet und daher ebenfalls den Profilen 45, 46 so zugeordnet, daß die Scheibe 1 und/oder das Schmuckpaneel 3 nur bei in Öffnungsstellung befindlicher Schließplatte 66 nach vorn geschwenkt werden kann.

Bei den Ausführungsform nach Fig. 12 bis 27 sind, soweit möglich, gleiche Teile mit denselben Bezugszeichen versehen.

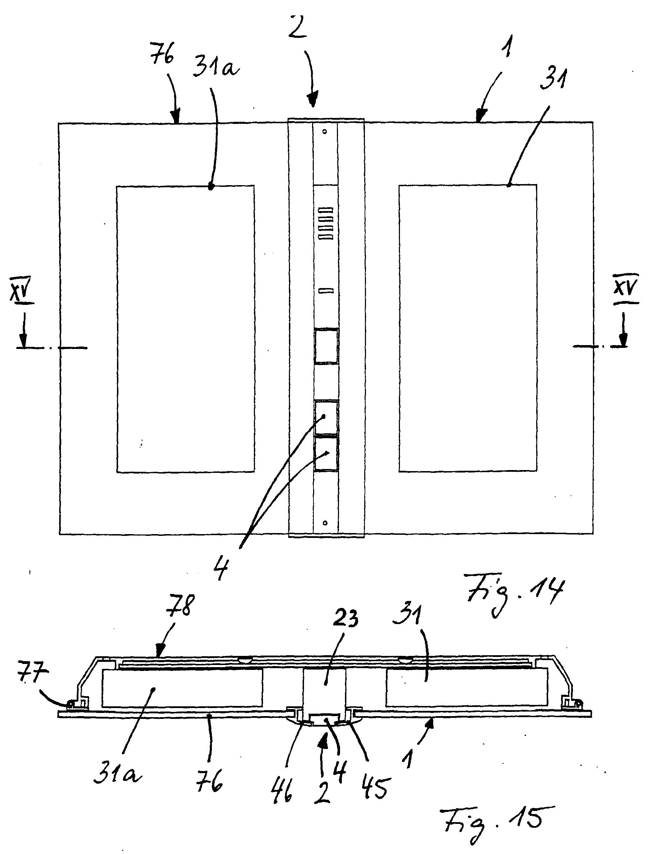

Die Ausführungsform nach Fig. 12 und 13 unterscheidet sich von der Ausführungsform nach Fig. 1 bis 11 dadurch, daß das Schmuckpaneel 3 fehlt. Statt dessen ist ein dem Profil 46 in Fig. 2 entsprechendes Profil 71 mittels eines dem Scharnierteil 18 in Fig. 3 entsprechenden Scharnierteils 72 direkt mit einer Unterkonstruktion 73 verbunden. Diese besteht vorzugsweise wiederum aus einem stranggepreßten oder extrudierten Profil, das sich lediglich durch die Form eines Stegs 74 vom Profil der Unterkonstruktion 8 unterscheidet. Der Funktionsbalken 2 ist entsprechend Fig. 1 bis 11 ausgebildet.

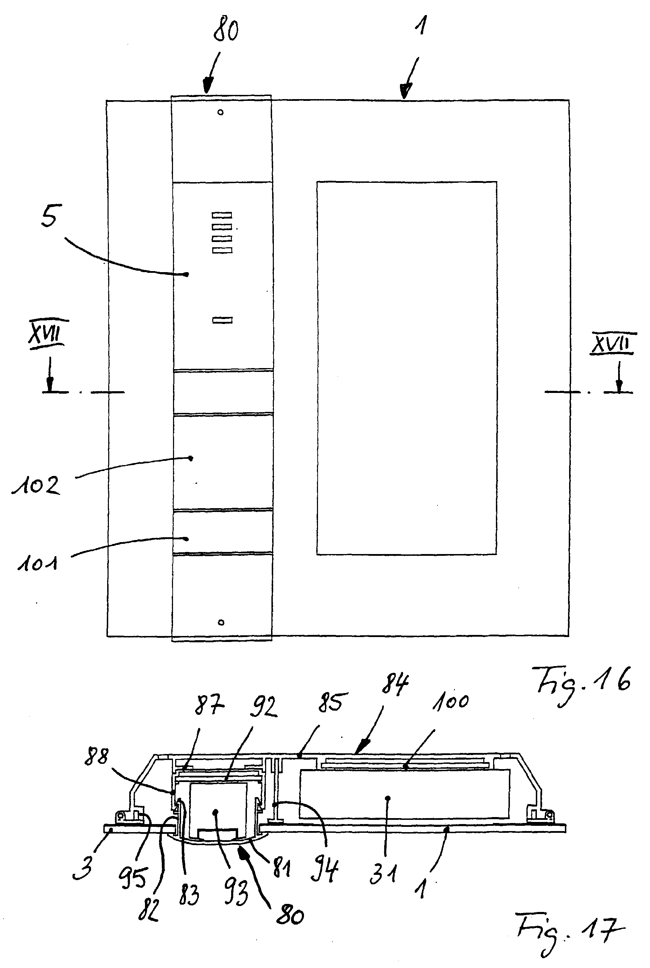

Bei der Ausführungsform nach Fig. 14 und 15 ist gegenüber Fig. 1 bis 11 der Hauptunterschied darin zu sehen, daß das Profil 46 nicht an einem Schmuckpaneel, sondern an einer zweiten, der Scheibe 1 entprechenden Scheibe 76 befestigt ist. Die Scheibe 76 ist z.B spiegelsymetrisch zur Scheibe 1 ausgebildet und mittels eines Scharnierteils 77 an einer Unterkonstruktion 78 gelagert, die gegenüber der Unterkonstruktion 8 nach Fig. 2 und 3 entsprechend verbreitert ist. Der Funktionsbalken 2 ist entsprechend Fig. 1 bis 11 ausgebildet. Diese Ausführungsform hat den Vorteil, daß sie gegenüber Fig. 1 bis 11 doppelt soviel Platz für die Anbringung von Namen bietet, wobei die Bedienelemente 4 wahlweise der in Fig. 14 rechten oder linken Namensleiste 31 bzw. 31a zugeordnet sein können. Im übrigen ist die Anordnung analog zu Fig. 1 bis 11.

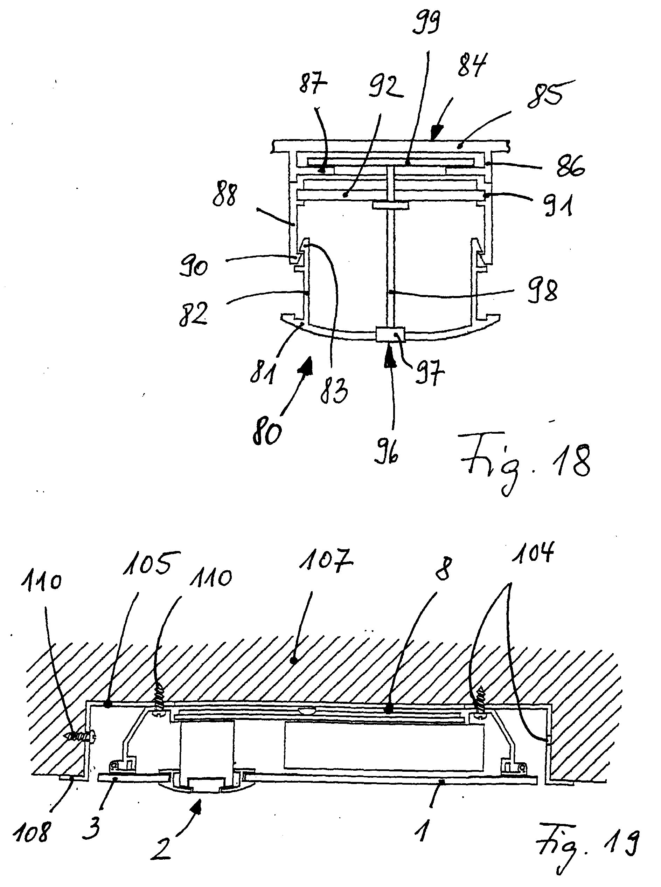

Die Ausführungsform nach Fig. 16 bis 18 unterscheidet sich von den bisherigen Ausführungsformen dadurch, daß ein Funktionsbalken 80 ein über die ganze Länge bzw. Höhe der Informations- und Kommunikationseinrichtung durchlaufendes Profil 81 mit einer im wesentlichen geschlossenen Oberfläche aufweist, während die Profile 45, 46 (Fig. 2) fehlen. Das Profil 81 ist an seiner Rückseite mit Stegen 82 versehen, die der Bildung von Schnappverbindungen dienende Hinterschneidungen 83 aufweisen. Eine Unterkonstruktion 84, an der die Scheibe 1 wie bisher schwenkbar gelagert ist, weist im Bereich des Funktionsbalkens 80 zwei von einer Grundplatte 85 nach vorn abstehende Haltearme 86 auf, die mit einander zugewandten Sperrenasen 87 (Fig. 17) versehen sind. Schließlich ist ein Verbindungsprofil 88 vorgesehen, das auf die Haltearme 86 aufgelegt werden kann und nach vorn abstehende Haltestege 89 mit Rastnasen 90 und einander zugewandten Längsnuten 91 (Fig. 18) aufweist. Die Längsnuten 91 dienen zum Einschieben eines plattenförmigen Trägers 92 (Fig. 17), der hier denjenigen Teil des Trägers 20 (Fig. 1 bis 11) ersetzt, der dem Funktionsbalken 80 zugeordnet ist und Schaltorgane 93 und alle erforderlichen Leitungen und Schaltkreise od. dgl. trägt. Zur Sicherung des unbefugten Öffnens der Einrichtung sind die schwenkbare Scheibe 1 und das Schmuckpaneel 3 in der Schließstellung auf je einem Auflager 94 bzw. 95 der Unterkonstruktion 84 abgestützt, während gleichzeitig das Profil 81 mit je einem Längsrand versehen ist, der im Schließzustand zugehörige Längsränder der Scheibe 1 und des Schmuckpaneels 3 überdeckt. Wenigstens ein Verriegelungsmechanismus 96 (Fig. 18) weist in diesem Fall einen durch eine Öffnung im Profil 81 zugänglichen Schließzylinder 97 auf, der an seiner Rückseite mit einer Stange 98 versehen ist, die eine exzentrische Schließplatte 99 trägt, die in einem Raum zwischen der Grundplatte 85 und den Sperrnasen 87 angeordnet ist. In einer Verriegelungsstellung verhindert die Schließplatte 99 ein Abziehen des Profils 81 nach vorn, sobald dessen Hinterschneidungen 83 hinter den Rastnasen 90 des Verbindungsprofils 88 eingerastet sind. Dagegen liegt die Schließplatte 99 in einer Freigabestellung völlig in einem zwischen den beiden Sperrnasen 87 verbleibenden Spalt, so daß in dieser Stellung das Profil 81 und mit ihm das Verbindungsprofil 88 von der Unterkonstruktion 84 nach vorn abgezogen werden kann. Dadurch ist eine Verschwenkung der Scheibe 1 und/oder des Schmuckpaneels 3 möglich. Alternativ könnte das Verbindungsprofil 88 auch aus einem Stück mit der Unterkonstruktion 84 hergestellt sein. Im übrigen ist bei dieser Ausführungsform vorgesehen, in die Unterkonstruktion 84 einen zweiten plattenförmigen Träger 100 einzuschieben, der demjenigen Teil des Trägers 20 nach Fig. 1 bis 11 entspricht, der der Namensleiste 31 zugeordnet ist.

Schließlich besteht ein Unterschied zwischen der Ausführungsform nach Fig. 16 bis 18 und den Ausführungsformen nach Fig. 1 bis 15 darin, daß die Schaltorgane 93 entweder als vollständig unterhalb des Profils 81 angeordnete Sensoren, insbesondere Berührungssensoren ausgebildet sind oder das Profil 81 dort, wo eine Klingeltaste od. dgl. vorgesehen werden soll, eine Durchbrechung aufweist. In diesem Fall wird die Durchbrechung vorzugsweise über die ganze Breite des Funktionsbalkens 80 erstreckt, während die darunter befindlichen, den Schaltorganen 23 (Fig. 2) entsprechenden Taster od. dgl. mit einer in die Durchbrechung ragenden, ein Bedienelement darstellenden Abdeckung 101 verbunden werden (Fig. 16). Bei dieser Variante bilden somit die zwischen den Tasten bzw. Abdeckungen 101 verbleibenden Oberflächenabschnitte des Profils 81 gleichzeitig die Blenden (z.B. 102 in Fig. 16). Die Lufteintritts- und Luftaustrittsöffnungen in der Blende können hier ebenso wie die Aufnahmen für die Schließzylinder 97 als Aussparungen in den entsprechenden Oberflächenabschnitten der Profile 81 realisiert sein. Alternativ wäre es aber auch möglich, analog zu Fig. 1 bis 11 separate Blenden für diese Fälle vorzusehen.

Eine Variante der Ausführungsformen nach Fig. 16 bis 18 könnte darin bestehen, daß das Schmuckpaneel 3 weggelassen und die Unterkonstruktion 84 mit einem seitlichen, vom Profil 81 überdeckten Abschluß versehen wird.

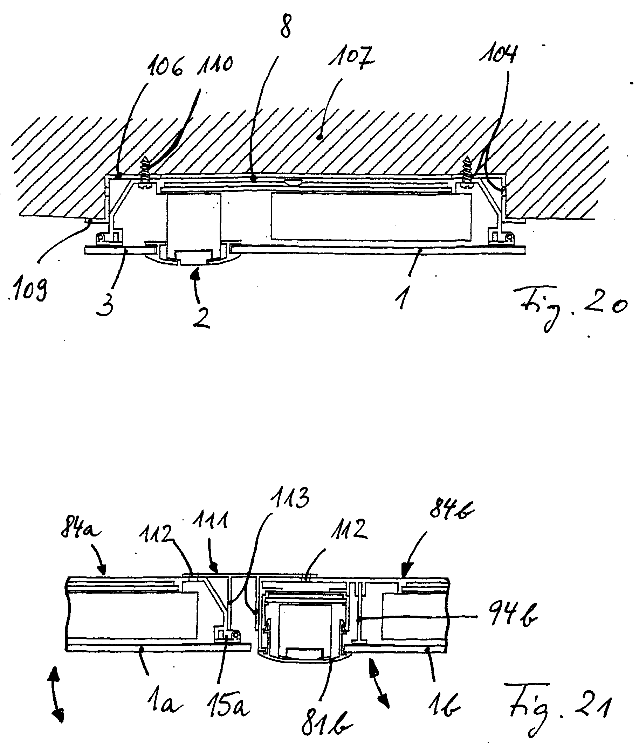

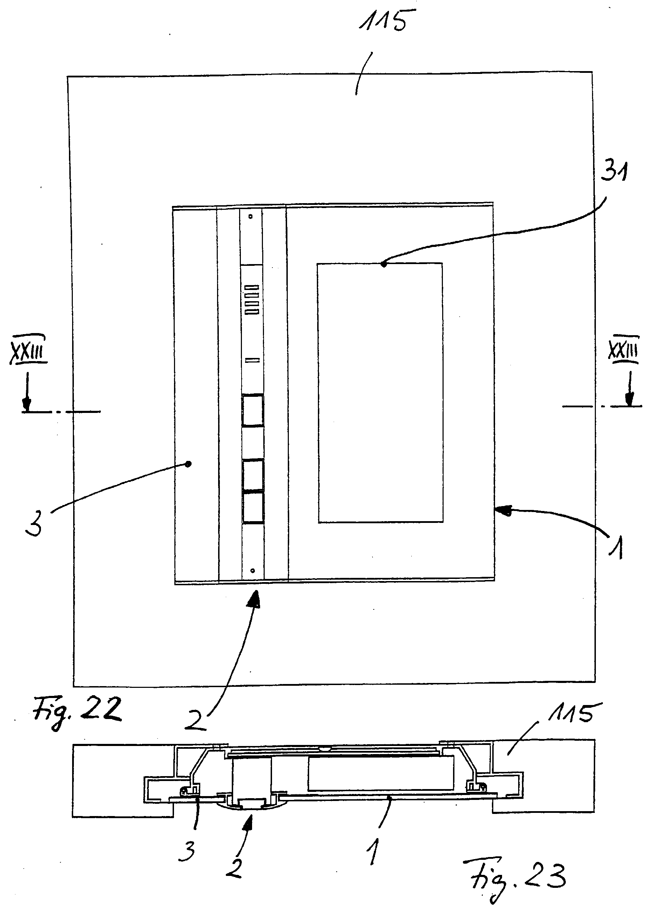

Die Fig. 19 und 20 zeigen Ausführungsformen analog zu Fig. 2. Der einzige Unterschied besteht darin, daß die Unterkonstruktion 8 z.B. mit Hilfe von Schraublöcher 104 durchragenden Schrauben 110 in einer Unterputzdose 105 bzw. 106 befestigt wird, die ihrerseits in ein schematisch angedeutetes Mauerwerk 107 eingesetzt wird und die Unterkonstruktion 8 ganz (Fig. 19) oder teilweise (Fig. 20) aufnimmt. Dabei kann ein die Unterputzdose 105, 106 umgebender Rahmen 108, 109 entweder sichtbar sein (Fig. 19) oder wie die gesamte Unterkonstruktion 8 innerhalb der äußeren Kontur der aus der Scheibe 1, dem Funktionsbalken 2 und dem Schmuckprofil 3 gebildeten Frontseite der Einrichtung angeordnet werden (Fig. 20). Die Befestigung der Unterptzdose 105, 106 am Mauerwerk 107 kann ebenfalls mittels der die Schraublöcher 104 durchragenden Schrauben 110 erfolgen.

Bei der Ausführungsform nach Fig. 21 sind zwei identische Einrichtungen nach Fig. 16 bis 18 durch ein Verbindungsprofil 111 miteinander verbunden, das im wesentlichen aus einer mit Schraublöchern 112 versehenen Platte besteht, die mit den aneinandergrenzenden Unterkonstruktionen 84a,84b verschraubt wird. Zwei von dieser Platte nach vorn vorstehende Stege 113 dienen dabei als Abstandhalter zwischen den beiden Unterkonstruktionen 84a, 84b. Außerdem kann die Platte mit nicht dargestellten, ihrer Befestigung an einer Wand od. dgl. dienenden Schraublöchern versehen sein. Abweichend von Fig. 16 bis 18 ist hier das Schmuckpaneel 3 der einen, in Fig. 21 rechten Einrichtung durch einen Randabschnitt der Scheibe 1a der in Fig. 21 linken Einrichtung ersetzt. Dieser Randabschnitt 1a ist dabei allerdings im Bereich des zugehörigen Scharnierteils 15a in einem zum Schmuckpaneel 3 entgegengesetzten Drehsinn schwenkbar.

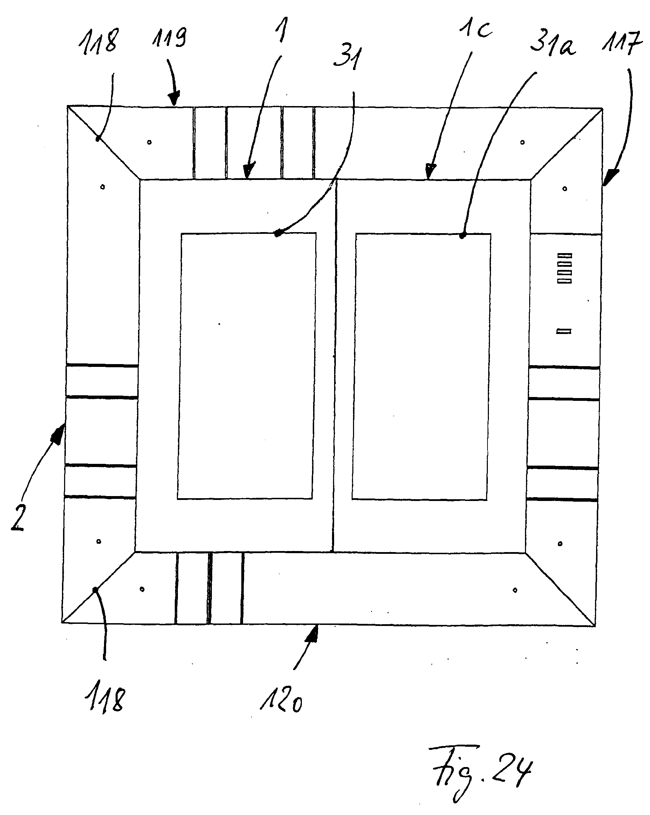

Fig. 22 und 23 zeigen eine Ausführungsform, die der Informations- und Kommunikationseinrichtung nach Fig. 1 bis 11 bis auf den Unterschied entspricht, daß sie von einem sichtbaren, ganz oder auch nur teilweise umlaufenden Blendrahmen 115 umgeben ist. Dabei kann es sich insbesondere um einen Einbaurahmen handeln, der für die Montage in einem Tür- oder Glasfassadenrahmen geeignet ist.

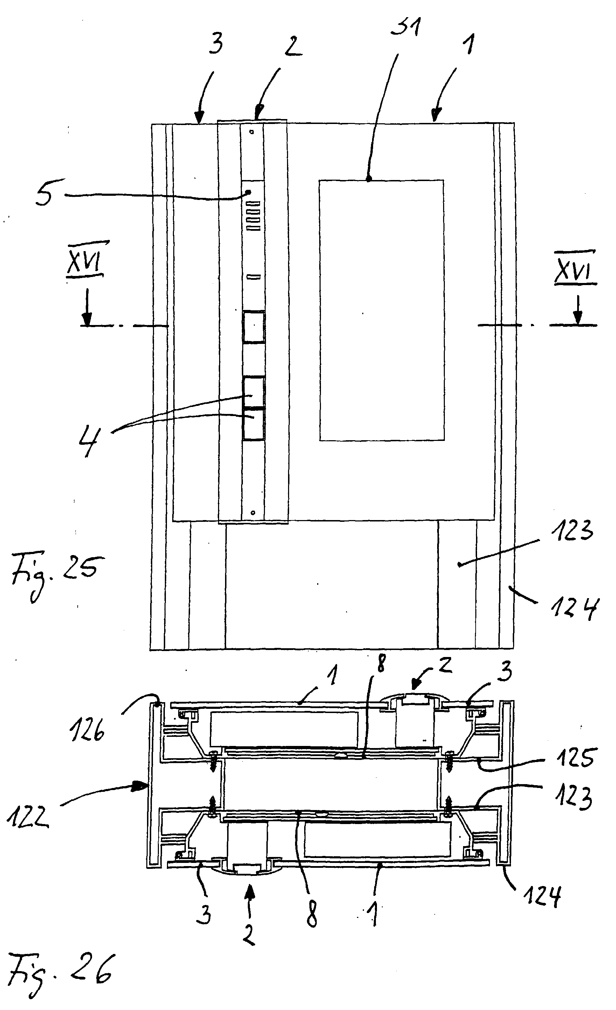

Fig. 24 zeigt eine Variante, die sich von der Ausführungsform nach Fig. 12 und 13 im wesentlichen dadurch unterscheidet, daß die dort gezeigte Scheibe 1 an den linken Seiten- bzw. Längsrand einer zweiten Scheibe 1c angesetzt und diese mit einem zweiten, rechts von ihr angebrachten, zweiten Funktionsbalken 117 versehen ist. Hierzu können beispielsweise dem Verbindungsprofil 111 nach Fig. 21 entsprechende Verbindungsprofile verwendet werden. Außerdem zeigt Fig. 24, daß die Funktionsbalken 2, 117 jeweils etwas länger als die Scheiben 1, 1c ausgebildet und mit Gehrungsschnitten 118 versehen sind, zwischen denen jeweils ein weiterer oberer bzw. unterer Funktionsbalken 119, 120 angeordnet wird. Die Scheiben 1, 1c sind dadurch mit einem aus den Funktionsbalken 2, 117, 119 und 120 gebildeten Rahmen umgeben. Ähnliche Rahmen können auch aus den anderen beschriebenen Funktionsbalken gebildet werden. Insbesondere ist z.B. eine Ausführungsvariante möglich, bei der die beiden Funktionsbalken 2 und 117 nach Fig. 24 durch zwei Funktionsbalken 80 nach Fig. 16 bis 18 ersetzt sind und zwischen beiden eine einzige Scheibe 1 schwenkbar gelagert ist, deren Breite z. B. der doppelten Breite der Scheiben 1, 1c in Fig. 24 entspricht.

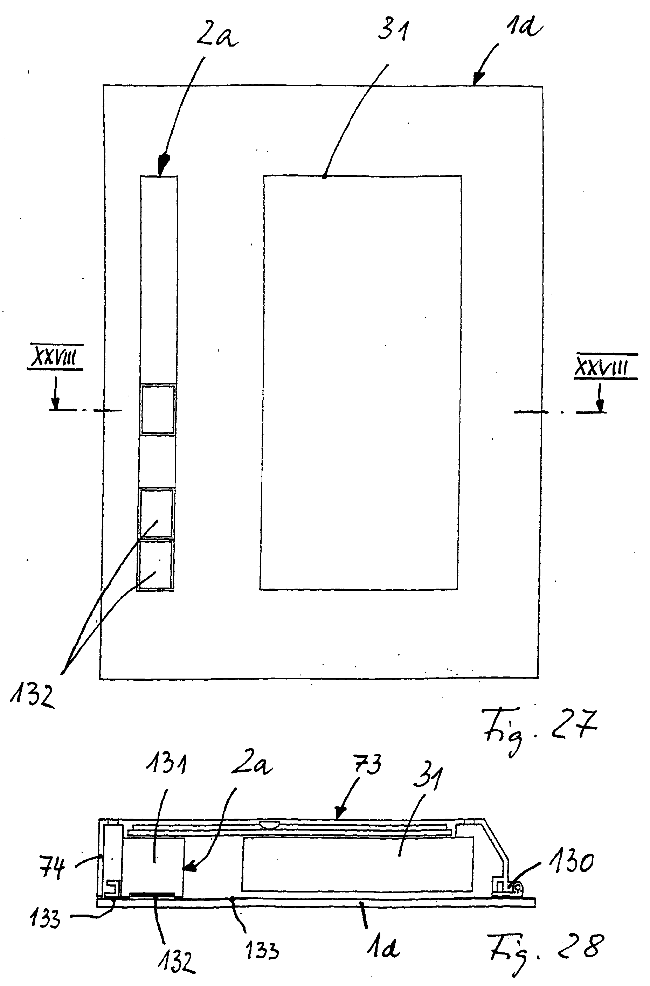

Fig. 25, 26 zeigen eine Ausführungsform analog zu Fig. 1 bis 11, wobei die Unterkonstruktion 8 jedoch nicht an einer Wand, sondern an einem Säulenprofil 122 befestigt ist, das mit nicht dargestellten Füßen freistehend vor einem Gebäude angeordnet werden könnte. Das Säulenprofil 122 weist eine Rückwand 123 mit nicht dargestellten Schraublöchern auf, an der die Unterkonstruktion 8 nach Fig. 2 und 3 mit Befestigungsschrauben befestigt werden könnte. Die Rückwand 123 ist dabei gegenüber vorstehenden Seitenteilen 124 etwas zurückgesetzt, wodurch eine Aufnahmeöffnung für die Unterkonstruktion 8 derart entsteht, daß die Seitenteile 124 nach dem Einbau der Informations- und Kommunikationseinrichtung im wesentlichen bündig mit der Scheibe 1, dem Funktionsbalken 2 und dem Schmuckpaneel 3 abschließen. Außerdem zeigt Fig. 25, daß das Säulenprofil 122 vorn und hinten identisch ausgebildet und daher mit einer zweiten Rückwand 125 und zweiten Seitenteilen 126 versehen werden kann, die zum Einbau einer zweiten Infomations- und Kommunikationseinrichtung nach Fig. 1 bis 11 dienen, in welchem Fall die Säule beidseitig nutzbar ist. In weiterer Ausgestaltung dieses Gedankens könnte das Säulenprofil 122 auch so ausgebildet sein, daß es einen drei- oder mehrseitigen Querschnitt besitzt und durch den Einbau entsprechend vieler Einrichtungen eine Benutzung von zwei oder mehr Seiten ermöglicht. Dabei können die Informations- und Kommunikationseinrichtungen über die ganze Höhe oder auch nur über einen Teil des Säulenprofils 122 erstreckt sein.

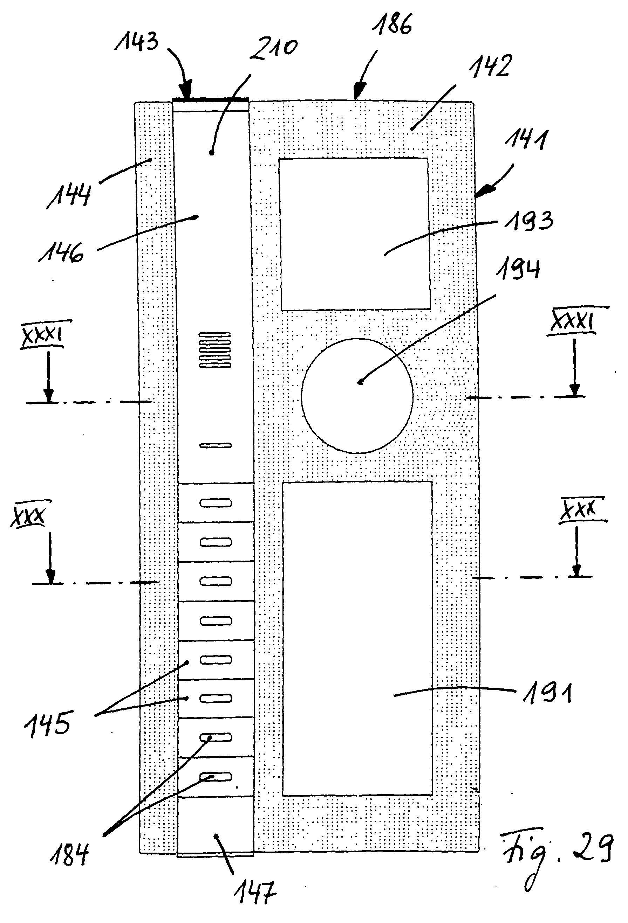

Die Ausführungsform nach Fig. 27 und 28 entspricht im wesentlichen der Ausführungsform nach Fig. 12 und 13 und weist daher für gleiche Teile dieselben Bezugszeichen auf. Im Unterschied zu Fig. 12 und 13 ist an der Unterkonstruktion 73 mittels Scharnierteilen 130 eine Scheibe 1d schwenkbar befestigt, deren Breite im wesentlichen der Breite der Unterkonstruktion 73 entspricht und die auch einen an die Namensleiste 31 grenzenden Funktionsbalken 2a überdeckt. Der Funktionsbalken 2a enthält analog zur bisherigen Beschreibung eine Vielzahl von Schaltorganen 131. Diese bestehen jedoch im Gegensatz zu den Schaltorganen 23 aus mit Sensoren 132 versehenen Schaltern, die hinter der Scheibe 1d angeordnet sind und durch bloße Berührung derselben von außen her betätigt werden, wie dies z.B. von den Bedienknöpfen moderner Fahrstühle her bekannt ist. Die Ausführungsform nach Fig. 27 und 28 ist daher besonders gut für eine Anwendung in Fahrstühlen und ähnlichen Einrichtungen geeignet, in welchem Fall die Sensoren 132 z.B. als Ruftasten für die Wahl des jeweiligen Stockwerks benutzt werden.

Wie Fig. 28 zeigt, liegt die Scheibe 1d auf der von den Scharnierteilen 130 abgewandten Seite mit ihrem Randabschnitt auf dem Steg 74 der Unterkonstruktion 73 auf. Die Innenseite der Scheibe 1d ist außerdem im Bereich des Funktionsbalkens 2a vorzugsweise bis auf schmale, den Blick auf die Sensoren 132 freigebende Ausschnitte mit einer den Masken 50, 51 (Fig. 2) entsprechenden, undurchsichtigen Schicht 133 versehen. In einer Schließstellung kann die Scheibe 1d mit Hilfe von Abdeckkappen, die den Abdeckkappen 52, 53 (Fig. 9 bis 11) ähnlich sind, unschwenkbar an der Unterkonstruktion 73 gesichert sein.

Ein besonders bevorzugtes Ausführungsbeispiel einer erfindungsgemäßen Informations- und Kommunikationseinrichtung ist schließlich in Fig. 29 bis 38 dargestellt. Sie enthält eine auf der Vorderseite angeordnete transparente Scheibe 141 aus Glas oder Kunststoff, die auf ihrer Rückseite teilweise mit einer undurchsichtigen, in Fig. 29 punktiert dargestellten Maske 142 versehen ist und mit einer Längskante an eine zugeordnete Längskante eines Funktionsbalkens 143 grenzt, der in der Betriebsstellung der Einrichtung vorzugsweise vertikal angeordnet ist. Die andere Längskante des Funktionsbalkens 143 grenzt an ein Schmuckpaneel 144 an, das aus demselben Material wie die Scheibe 141 besteht und auf seiner Rückseite durchgehend mit einer der Maske 142 entsprechenden, in Fig. 29 ebenfalls punktiert dargestellten Maske versehen sein kann.

Der Funktionsbalken 143 weist in einem unteren Bereich mehrere übereinanderliegende Bedienelemente 145 für Klingeltasten od. dgl. auf, an die sich nach oben und unten Blenden 146 bzw. 147 mit einer der Breite der Bedienelemente 145 entsprechenden Breite anschließen.

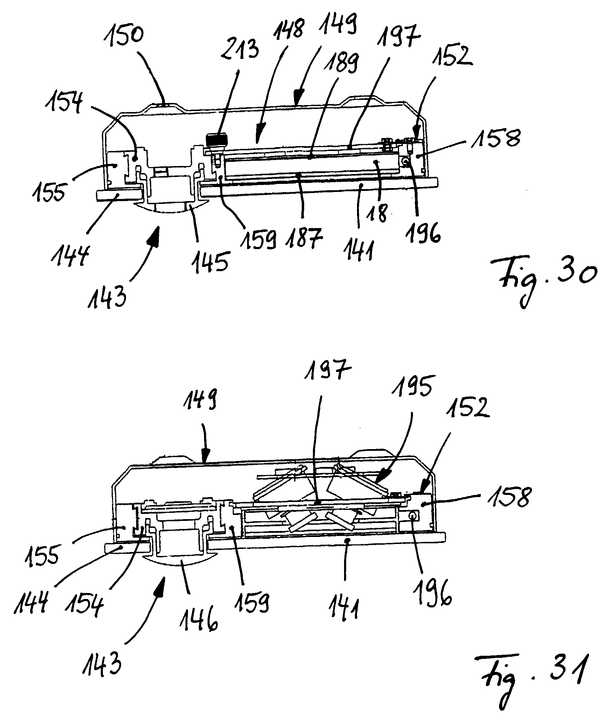

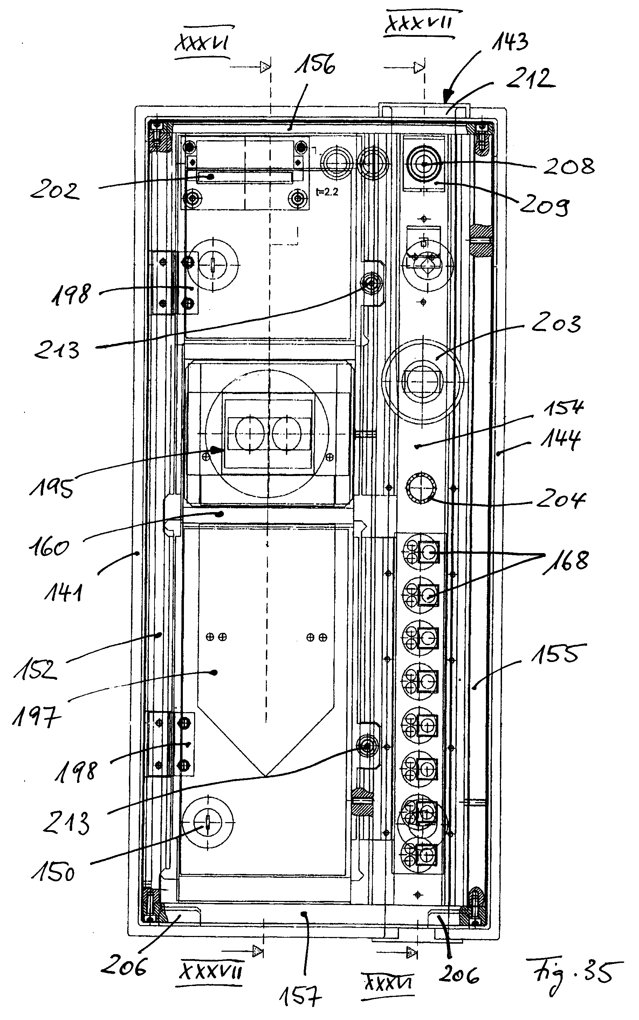

Wie insbesondere Fig. 30 und 34 zeigen, sind die Scheibe 141 und das Schmuckpaneel 144 an einer Unterkonstruktion 148 befestigt, die im Gegensatz zu Fig. 2 nicht unmittelbar an einer Wand od. dgl. befestigt wird, sondern in einer Wanne 149 mit U-förmigem Querschnitt montiert ist. In diesem Fall ist die Wanne 149 an ihrer Rückseite mit einer planparallelen Platte versehen, in der Schraublöcher 150 ausgebildet sind, die zur Befestigung der Wanne 149 an einer Wand od. dgl. und zur Aufnahme von Befestigungsschrauben dienen.

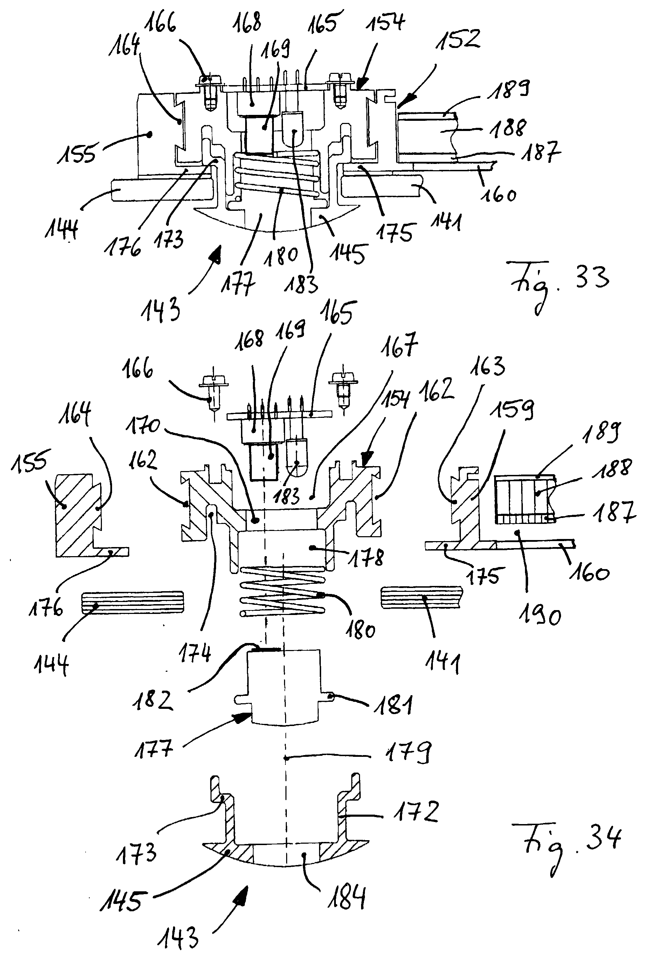

Die Unterkonstruktion 148 ist vorzugsweise aus fünf Profilen zusammengesetzt, und zwar einem Scheiben-Profil 152, einem zur Bildung des Funktionsbalkens 143 bestimmten Mittelprofil 154, einem Schmuckpaneel-Profil 155, einem oberen Deckprofil 156 und einem unteren Deckprofil 157. Das Scheiben-Profil 152 enthält seinerseits vorzugsweise zwei parallel und mit Abstand (vertikal) angeordnete Leisten 158 und 159, die durch (horizontale) Querstege 160 verbunden sind und einen Rahmen bilden, der mehrere übereinander angeordnete, durch die Querstege 160 getrennte Fenster 161 aufweist (Fig. 32). Die Vorderseite des Scheiben-Profils 152 ist mit der Rückseite der Scheibe 141 z.B. durch Kleben fest verbunden und weist im wesentlichen dieselbe Größe wie diese auf. Entsprechend ist die Vorderseite des Profils 155 z.B. durch Kleben fest mit der Rückseite des Schmuckpaneels 144 verbunden und weist im wesentlichen dieselbe Größe wie dieses auf.

Der Zusammenbau der verschiedenen Profile erfolgt vorzugsweise dadurch, daß das Mittelprofil 154 nach Fig. 33 und 34 an seinen beiden äußeren Längsrändern mit durchgehenden, im Querschnitt z.B. schwalbenschwanzförmigen Nuten 162 (Fig. 34) versehen ist, in die entsprechend geformte, ebenfalls durchgehende Vorsprünge 163,164 (Fig. 34) passen, die an der inneren Längskante des Profils 152 bzw. an der inneren Längskante des Profils 155 ausgebildet sind. Dabei ist die Anordnung so getroffen, daß die Profile 152 bzw. 155 mit ihren Vorsprüngen 163 bzw. 164 von oben oder unten her in die Nuten 162 eingeschoben werden können, um die Profile 152, 154 und 155 dadurch in quer zur Schieberichtung liegende Richtungen mit wenig Spiel durch Formschluß miteinander zu verbinden. Die Profile 152, 154 und 155 haben außerdem in Schieberichtung zweckmäßig dieselbe Länge, so daß sie im richtig montierten Zustand oben und unten bündig miteinander abschließen und in Verbindung mit den auf ihre Ober- bzw. Unterkanten aufgelegten Deckprofile 156, 157 die Unterkonstruktion 148 bilden.

Wie insbesondere Fig. 33 und 34 zeigen, dient das Mittelprofil 154 zur Bildung des Funktionsbalkens. Es ist dazu an seiner Rückseite mit einem ersten Träger in Form einer Platine 165 versehen, die mit Befestigungsschrauben 166 am Profil 154 befestigt wird. Die Platine 165 deckt einen rückwärtigen, über die Länge des Profils 154 durchgehenden Hohlraum 167 ab, in den auf der Vorderseite der Platine 165 befestigte Schaltorgane 168 einer Klingel-, Ruf- und/oder Lichtanlage in Form von Tastschaltern ragen, die auf ihren Vorderseiten mit federnd eindrückbaren Tasten 169 versehen sind. Im Ausführungsbeispiel sind acht derartige Schaltorgane 168 vorgesehen und in einer (vertikalen) Spalte längs des Profils 154 angeordnet. Die Platine 165 wird dabei so am Profil 154 befestigt, daß die Schaltorgane 168 bzw. deren Tasten 169 im montierten Zustand hinter Ausschnitten 170 liegen, die in einem den Hohlraum 167 begrenzenden Boden des Profils 154 in denselben (vertikalen) Abständen ausgebildet sind, wie dies für die Tasten 169 der Platine 165 gilt.

Die Bedienelemente 145 für die Tasten 169 der Schaltorgane 168 sind ebenfalls aus Fig. 33 und 34 ersichtlich. Sie bestehen z.B. aus nach vorn konvex ausgebildeten Profilen, die an ihren Rückseiten mit zwei Führungsstegen 172 versehen sind, die in einem mittleren Abschnitt je eine nach außen weisende Schulter 173 aufweisen. Die Enden der beiden Führungsstege 172 sind in einem Abstand angeordnet, der dem Abstand von zwei Führungsnuten 174 entspricht, die in der Vorderseite des Profils 154 und auf beiden Seiten der Ausschnitte 170 ausgebildet und über die Längsrichtung des Profils 154 erstreckt sind. Die Führungsstege 172 können dabei von oben oder unten her so tief in die Führungsstege 174 eingeführt werden, daß die Vorderseiten ihrer Schultern 173 im montierten Zustand der Unterkonstruktion 148 von Haltenasen 175, 176 hintergriffen werden, die auf den Vorderseiten der Leiste 159 und des Profils 155 angebracht sind und ausreichend weit nach innen ragen. Werden daher zunächst die Leiste 159 und das Profil 155 von oben oder unten her auf das Mittelprofil 154 aufgeschoben und dann die Bedienelemente 145 von oben oder unten her in die Führungsnuten 174 eingesetzt, dann verhindern die Haltenasen 175, 176 eine Herausnahme bzw. ein Herausfallen der Bedienelemente 145 nach vorn aus der Unterkonstruktion 148.

Die Bedienelemente 145 wirken vorzugsweise nicht direkt, sondern über Lichtleitelemente 177 auf die Schaltorgane 168 ein. Zu diesem Zweck weist das Profil 154 einen vorderen, durchgehenden Hohlraum 178 auf, der die Lichtleitelemente 177 in Richtung einer senkrecht zur Vorderseite verlaufenden Achse 179 mit Gleitsitz führt. Vordere Abschnitte der Lichtleitelemente 177 können dagegen in einen Raum zwischen den Führungsstegen 172 der Bedienelemente 145 eingesetzt und in diesem geführt werden. Dies erfolgt unter Mitwirkung je einer ein zugehöriges Lichtleitelement 177 umgebenden Schraubendruckfeder 180, die sich zwischen dem Boden des Profilteils 154 und je einem am Umfang der Lichtleitelemente 177 ausgebildeten Bund 181 abstützt.

Die Montage erfolgt z.B. derart, daß zunächst irgendein Lichtleitelement 177 so weit wie möglich in ein Bedienelement 145 geschoben und dann von hinten die Schraubendruckfeder 180 auf das betreffende Lichtleitelement 177 gesteckt wird. Danach wird diese Einheit unter Vorspannung der Schraubendruckfeder 180 in das Mittelprofil 154 eingesetzt und gleichzeitig in dessen Führungsnuten 174 eingeführt (Fig. 33,34). Die Anordnung ist dabei so getroffen, daß einerseits die Feder 180 das zugehörige Lichtleitelement 177 gegen das zugehörige Bedienelement 145 und damit dessen Schultern 173 gegen die Haltenasen 175, 176 drückt. Andererseits besteht dabei aber zwischen der Rückseite der Schulter 173 und zugeordneten Anschlägen des Profils 154 bzw. zwischen den Enden der Führungsstege 172 und den Böden der Führungsnuten 174 so viel Spiel, daß die Bedienelemente 145 gegen den Druck der Federn 180 in Richtung der Schaltorgane 168 gedrückt werden können.

Die Rückseiten der Lichtleitelemente 177 sind mit Betätigungsstiften 182 versehen, die gegenüber der Achse 179 seitlich etwas versetzt sind, beim Eindrücken der Bedienelemente 145 durch die Ausschnitte 170 des Profils 154 hindurch auf die Tasten 169 der Schaltorgane 168 einwirken und diese nach Art von Tastschaltern betätigen. Neben den Schaltorganen 168 sind außerdem Leuchtelemente 183 in Form von Leuchtdioden od. dgl. angeordnet, deren Licht durch die Lichtleitelemente 177 übertragen wird und durch Schlitze 184 (Fig. 1 und 34) in den Bedienelementen 145 hindurch von außen her sichtbar ist.

Im übrigen ist klar, daß alle Bedienelemente 145 und die zugehörigen Teile auf dieselbe Art und Weise in der Unterkonstruktion 148 montiert werden können. Dabei ergibt sich der Vorteil, daß alle Bedienelemente 145 nacheinander von unten oder oben her in das Profilteil 154 bzw. dessen Führungsnuten 174 eingesetzt und dann in deren Längsrichtung so weit verschoben werden können, bis die Betätigungsstifte 182 den zugehörigen Tasten 169 gegenüber liegen.

Die Blenden 146 und 147, die eine an sich beliebige Länge bzw. Höhe aufweisen können, haben zweckmäßig eine den Bedienelementen 145 entsprechende Querschnittsform, so daß sie theoretisch wie diese mit Hilfe der Lichtleiter 177 und Federn 180 montiert werden können. Zweckmäßig werden jedoch in diesem Fall die Federn 180 weggelassen und die Lichtleiter 177 durch entsprechend ausgebildete, die Betätigungsstifte 182 nicht aufweisende Blindklötze ersetzt, die die Blenden 146,147 im eingesetzten Zustand weitgehend spielfrei zwischen den Führungsnuten 174 und den Haltenasen 175,176 halten. Bei dieser Anordnung braucht das Profil 154 im Bereich der Blenden 146,147 keine Ausschnitte 170 aufweisen.

Ein besonderer Vorteil der beschriebenen Ausführungsform besteht darin, daß anstelle der Bedienelemente 145 auch Blendenteile mit einer der Länge der Bedienelemente 145 entsprechenden Länge bzw. Höhe verwendet werden können. Auf diese Weise ist es möglich, wahlweise einen oder mehrere der Schaltorgane 168 unwirksam zu machen. Wenn z.B. abwechselnd derartige Blendenteile und Bedienelemente 145 eingesetzt werden, weist dieselbe Einrichtung nur vier statt acht Bedienelemente 145 auf.

In einer weiteren, zum Funktionsbalken 143 parallelen Spalte ist gemäß Fig. 29 bis 34 eine Namensleiste 186 vorgesehen, die dieselbe Funktion wie die Namensleiste 31 nach Fig. 1 bis 8 hat. Im Ausführungsbeispiel wird sie mit Hilfe von drei planparallelen, quadratischen oder rechteckigen Platten 187, 188 und 189 realisiert, wobei die Platte 187 eine dünne, transparente, z.B. aus Acrylglas bestehende Abdeckplatte, die Platte 188 ein Lichtleitelement und die Platte 189 eine Reflexionsplatte ist. Zwischen die Platten 187 und 188 kann ein durchscheinendes Namensschild gelegt werden, auf dem Namen, Firmen od. dgl. aufgedruckt sind. Die drei Platten 187 bis 189 bilden einen Stapel, der z.B. entsprechend Fig. 30, 32 und 34 von hinten in einen Hohlraum 190 (Fig. 34) eingelegt wird, der von den einander gegenüberliegenden Leisten 158, 159 des Scheiben-Profils 152 und den auf deren Vorderseiten liegenden Querstegen 160 gebildet wird. Dabei ist die Anordnung so getroffen, daß der zu beschriftende Teil des Namensschildes in einem von der Maske 142 (Fig. 29) definierten Flächenbereich 191 zu liegen kommt.

Eine entsprechende Anordnung, die zu einem Stapel 192 führt (Fig. 32), kann einem ebenfalls von der Maske 142 freigelassenen Flächenbereich 193 (Fig. 29) zugeordnet und z.B. zur Darstellung einer Hausnummer od. dgl. verwendet werden.

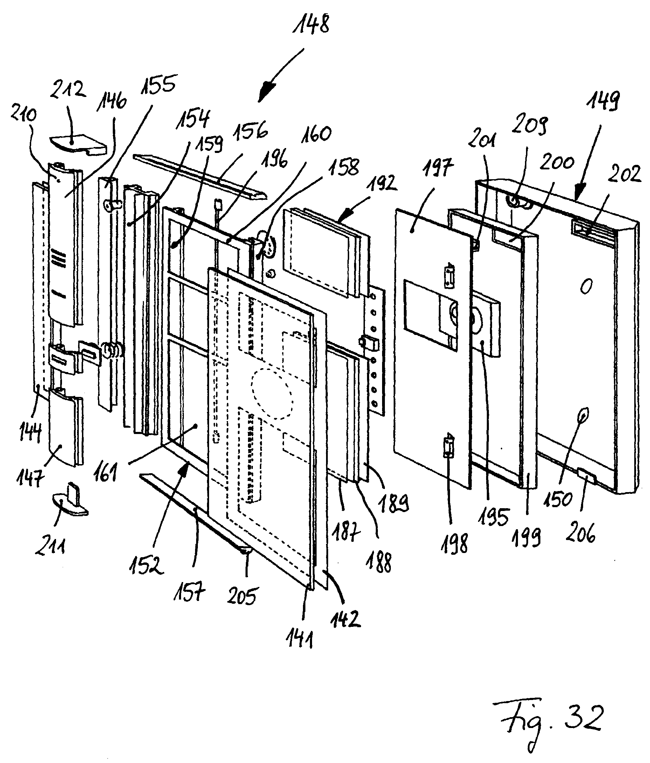

Zwischen den Flächenbereichen 191 und 193 weist die Namensleiste 186 einen weiteren, von der Marke 142 freien Flächenbereich 194 (Fig. 29) auf, durch den hindurch wenigstens eine an einem Modul 195 befestigte Videokamera 195 (Fig. 31) wirksam wird.

Zur Beleuchtung der Namensleiste 186 dient wenigstens ein schematisch in Fig. 30 bis 32 angedeutetes Leuchtmittel 196, das in einer nach innen weisenden, durchgehenden Nut der Leiste 158 des Profils 152 angeordnet und zweckmäßig über die ganze Länge bzw. Höhe der Namensleiste 186 erstreckt ist. Das Leuchtmittel 196 ist z.B. eine Leuchtstoffröhre, die an eine Seitenkante der Lichtleiter-Platten 188 grenzt und deren Licht von der Reflexionsplatte 189 reflektiert und auf das Namens- bzw. Hausnummernschild gerichtet wird.

Die Rückseite des Profilteils 152 ist gemäß Fig. 30 bis 32 von einem zweiten Träger in Form einer Platine 197 abgedeckt. Die Befestigung erfolgt mit Hilfe von zwei Scharnieren 198, die so an der Leiste 158 und an einem Längsrand der Platine 157 befestigt sind, daß diese relativ zum Profil 152 verschwenkt werden kann, wie weiter unten erläutert ist. An der Vorderseite der Platine 197 ist unter anderem der die Videokameras tragende Modul 195 befestigt, während auf der Rückseite alle zu deren Betrieb und zum elektrischen Anschluß der Leuchtmittel 196 erforderlichen Leitungen angebracht sind, von denen flexible, das Verschwenken der Plantine 197 ermöglichende Kabel zu den Leuchtmitteln 196 führen. Die Rückseite der Platine 197 ist außerdem mit einer Abdeckung 199 abgedeckt, die eine Öffnung 200 aufweist, durch die ein elektrischer Anschlußstecker 201, der an der Seite der Platine 197 und an deren oberem Ende befestigt ist, nach rückwärts ragt. Diesem Anschlußstecker 201 ist eine an der Innenseite der Wanne 149 gebrachte Steckbuchse 202 zugeordnet, die mit nach hinten aus der Wanne 149 herausgeführten Kabeln für die übliche Verkabelung versehen ist.

Der Zusammenbau und die Funktion der anhand der Fig. 29 bis 34 beschriebenen Einrichtung sind insbesondere aus Fig. 35 bis 39 ersichtlich. Im zusammengebauten Zustand bilden die Profile 152, 154, 155, 156 und 157 eine Baueinheit, wobei das obere und untere Deckprofil 156, 157 z.B. durch Schrauben mit den übrigen Profilen verbunden sind und deren Relativverschiebungen verhindern. Außerdem sind in diesem Zustand einerseits alle Bedienelemente 145 und Blenden 146 bzw. 147, die zusammen Bestandteile des Funktionsbalkens 143 sind und durch die Deckprofile 156, 157 am Herausfallen nach oben oder unten gehindert werden, sowie die zugehörige Platine 165 am Mittelprofil 154 montiert, während andererseits alle Teile der Namensleiste 186 einschließlich der Platine 197 und ihrer Abdeckung 199 am Scheiben-Profil 152 angebracht sind. Schließlich sind hinter der Blende 146 vorzugsweise noch ein Lautsprecher 203 und ein Mikrofon 204 angeordnet, die z.B. an der Platine 165 befestigt und Teile eines Gegensprechmoduls sind.

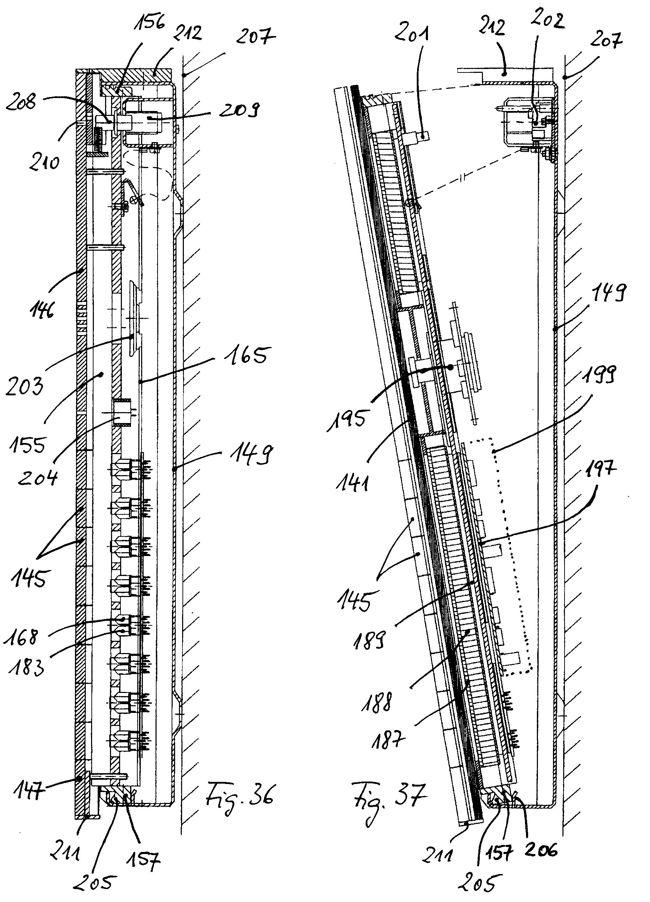

Das untere Deckprofil 157 weist gemäß Fig. 36, 37 an seiner Unterseite einen Montagehaken 205 auf, der in zugeordnete Aufnahmen 206 (vgl. auch Fig. 32) gesteckt werden kann, die an der unteren Innenseite der z.B. an einer Wand 207 befestigten Wanne 149 angebracht sind. Die Kombination aus Montagehaken 205 und Führungen 206 ermöglicht es, die gesamte Bauheinheit schwenkbar in die Wanne 149 einzusetzen und sie dann in Richtung eines Doppelpfeils v (Fig. 37) zu verschwenken. Auf diese Weise kann die Baueinheit entweder, wie Fig. 36 zeigt, ganz in die Wanne 149 versenkt oder aus dieser herausgeschwenkt werden (Fig. 37). Beim Heranschwenken der Baueinheit an die Wanne 149 gelangt einerseits der Anschlußstecker 201 automatisch in Steckkontakt mit der Steckbuchse 202 (Fig. 32), während andererseits nicht näher dargestellte Verriegelungsmittel 208 und 209, die am oberen Ende des Mittelprofils 154 bzw. am oberen Ende der Wanne 149 befestigt sind, in eine Verriegelungsstellung gelangen und die Baueinheit in der Wanne 149 festlegen.

Soll die Baueinheit wieder aus der Wanne 149 herausgeschwenkt werden, muß die Verriegelung analog zu Fig. 1 bis 28 mittels eines geeigneten Werkzeugs gelöst werden, das z.B. durch ein Loch 210 der Blende 146 gesteckt wird.

Im übrigen kann der Funktionsbalken 143 nach Fig. 32, 36 und 37 am unteren Ende durch eine in die Blende 147 eingedrückte Abschlußkappe 211 und am oberen Ende durch eine auf dem oberen Wannenrand befestigte Abdeckkappe 212 abgedeckt werden.

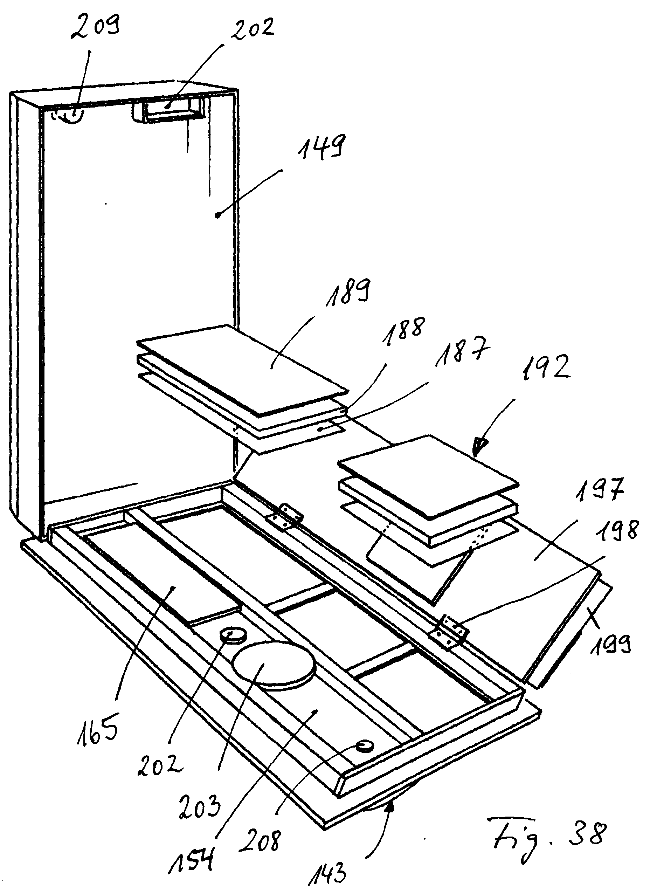

Das Auswechseln oder Ändern eines Namens oder einer Hausnummer kann auf die aus Fig. 37 und 38 ersichtlichen Weise erfolgen. Nach dem Lösen der Verriegelung wird die Baueinheit aus der Wanne 149 herausgeschwenkt und z.B. in eine horizontale, durch die Kombination aus Montagehaken 205 und Aufnahmen 206 fixierbare Stellung geschwenkt. Danach wird die Platine 197, ggfs. nach Entfernung der Abdeckung 199, entsprechend Fig. 38 mittels der Scharniere 198 aufgeklappt, indem zuvor zwei z.B. in Fig. 30 und 35 dargestellte Rändelschrauben 213 gelöst werden. Die Platten 187 bis 189 bzw. der Stapel 192 liegen jetzt frei und können daher herausgenommen werden, um ein Namensschild od. dgl. zu ändern.

Dagegen wäre eine Änderung des Funktionsbalkens bzw. der Bedienelemente 145 z.B. dadurch möglich, daß das in Fig. 38 nur schematisch dargestellte Mittelprofil 154 am oberen oder unteren Ende freigelegt wird, indem das zugehörige Deckprofil 156 bzw. 157 abgeschraubt wird, um nach der Abnahme der Platine 165 die Bedienelemente 145 bzw. Blendenteile auszuwechseln.

Die übrige Ausgestaltung der Einrichtung kann weitgehend in Analogie zu Fig. 1 bis 28 erfolgen.

Die Herstellung insbesondere der Profile 152, 154 und 155 erfolgt wie bei den übrigen Ausführungsbeispielen vorzugsweise durch Strangpressen oder Extrudieren, wobei die Fenster 161 und Ausschnitte 170 zweckmäßig in einem nachfolgenden Arbeitsgang durch Fräsen, Stanzen, Bohren od. dgl. angebracht werden.

Die Erfindung ist nicht auf die beschriebenen Ausführungsbeispiele beschränkt, die auf vielfache Weise abgewandelt werden können. Beispielsweise können anstelle der beschriebenen Bedienelemente, Schaltorgane und Namensleisten andere, vorzugsweise im Handel verfügbare Bauelemente verwendet werden. Dasselbe gilt für die in Fig. 4 bis 6 nur beispielhaft angedeuteten Befestigungs- bzw. Aufnahmemittel, die auch durch Schraub- oder Schnappverbindungsmittel ersetzt werden können. Dabei werden mit besonderem Vorteil Mittel vorgesehen, mittels derer die Befestigungsmittel in Spaltenrichtung der Träger verstellbar auf diesem montierbar sind, um ein noch so kleines Rastermaß für die Lage der Bedienelemente zu vermeiden. Dieses Mittel könnte z.B. aus einer mit Längsschlitz versehenen Schiene bestehen, in der die Schaltorgane verschiebbar angeordnet sind. Alternativ wäre es auch möglich, Schaltorgane verschiebbar auf den Leiterbahnen 27 zu befestigen. Weiter ergibt sich insbesondere aus Fig. 3 bis 6, daß die Träger 20, 92, 100, 165 und 197 zweckmäßig nach Art von Platinen ausgebildet werden, wie dies von der Elektro- und Elektronikindustrie her allgemein bekannt ist. Außerdem können andere Mittel zur Befestigung der Scheiben, Funktionsbalken und Schmuckpaneele an der Unterkonstruktion und andere als die dargestellten Verriegelungsmechanismen 60, 96, 208 und 209 vorgesehen werden. Insbesondere wäre es möglich, die Schwenkachse z.B. horizontal statt vertikal anzuordnen oder Steckverbindungen od.dgl. anstelle von Schwenklagerungen vorzusehen. Weiterhin können vor allem bei großen Einrichtungen der beschriebenen Art auch jeweils zwei oder mehr, durch eine schmale Stoßfuge voneinander getrennte Scheiben vorgesehen werden, wenn auch im Bereich der Namensleiste eine vollständig geschlossene Oberfläche bevorzugt wird. Außerdem können, wie z.B. in Fig. 3 durch das Bezugszeichen 128 angedeutet ist, insbesondere zwischen den verschiedenen Scheiben, Funktionsbalken und Schmuckpaneelen und der Unterkonstruktion Dichtleisten oder andere Dichtmittel angebracht werden, um das Eindringen von Schmutz und Feuchtigkeit in die mit den Bedienelementen, Namensleisten und anderen Bauelementen versehenen Bereiche zu verhindern. Außerdem kann die erfindungsgemäße Einrichtung außer als Bedienungspaneel für Klingel-, Ruf- oder Lichtanlagen an Gebäuden, Fahrstühlen od. dgl. auch als allgemeines Ankündigungstableau od. dgl. verwendet werden. Weiterhin können die verschiedenen Profile, insbesondere wenn sie aus Metallen wie Aluminium od. dgl. bestehen sollen, auch durch dem Strangpressen bzw. Extrudieren äquivalente Verfahren wie z.B. verschiedene Umformverfahren wie Biegen od. dgl., d.h. durch Verfahren hergestellt werden, die zu längeren Profilen führen, als tatsächlich benötigt werden, und daher einen nachfolgenden Ablängschritt erforderlich machen. Schließlich versteht sich, daß die verschiedenen Merkmale und Ausführungsbeispiele auch in anderer Weise miteinander kombiniert werden können, als aus den beigefügten Zeichnungen und der zugehörigen Beschreibung ersichtlich ist.

## Patentansprüche

1. Informations- und Kommunikationseinrichtung für Gebäude, mit einer Unterkonstruktion (8,73,78,84,148) zur Montage wenigstens einer zum Anbringen von Namen bestimmten, in wenigstens einer ersten Spalte angeordneten Namensleiste (31,31a,186) und einer Mehrzahl von Bedienelementen (4,101,132,145) für Schaltorgane (23,93,131,168) von Klingel-, Ruf- oder Lichtanlagen, wobei diese Bedienelemente (4,101,132,145) in einer zur ersten Spalte parallelen zweiten Spalte und in Spaltenrichtung hintereinander liegend angeordnet sind, und einer zur Abdeckung der Namensleiste (31,31a,186) bestimmten, transparenten Scheibe (1,76,141), dadurch gekennzeichnet, daß die Bedienelemente (4,101,132,145) an ausgewählten Orten innerhalb der zweiten Spalte wahlweise montierbar sind, zum Auffüllen von zwischen den Bedienelementen (4,101,132,145) und/oder diesen und den Enden der Unterkonstruktion (8,73,78,84,148) verbleibenden Zwischenräumen Blenden (5,7,102,146,147) einsetzbar sind und die Blenden (5,7,102,146,147) derart an der Unterkonstruktion (8,73,78,84,148) montierbar sind, daß die Bedienelemente (4,101,132,145) und die Blenden (5,7,102,146,147) die Vorderseite eines durchgehenden, an die Scheibe (1,76,141) grenzenden Funktionsbalkens (2,8,117,143) bilden.

2. Einrichtung nach Anspruch 1, dadurch gekennzeichnet, daß ein in bzw. an der Unterkonstruktion (8,73,78,84,148) montierbarer Träger (20;92,100; 165,197) vorgesehen ist, der alle elektrischen Leitungen (27,43) od. dgl. aufweist, die für die Funktion der Bedienelemente (4,101,132,145) und ggf. weiterer, der Namensleiste (31,31a,186) oder dem Funktionsbalken (2,80,117,143) zugeordneter Elemente (37,48,49,195,203,204) erforderlich sind, und mit der Namensleiste (31,31a,186) und dem Funktionsbalken (2,80,117,143) eine selbständig funktionsfähige Einheit bilden.

3. Einrichtung nach einem der Ansprüche 1 oder 2, dadurch gekennzeichnet, daß die Scheibe (1,76) mittels eines an ihrer Rückseite angebrachten Scharnierteils (17,77) schwenkbar an der Unterkonstruktion (8,73,78,84) oder dem Träger (20;92,100) befestigt ist.

4. Einrichtung nach einem der Ansprüche 1 bis 3, dadurch gekennzeichnet, daß dem Fumktionsbalken (80,143) wenigstens ein zur Festlegung der Bedienelemente (93,145) bestimmtes, in seiner Längsrichtung verlaufendes Profil (8,154) zugeordnet ist.

5. Einrichtung nach Anspruch 4, dadurch gekennzeichnet, daß das Profil (81) und die Blende (102) aus einem Stück bestehen und das Profil (81) im Bereich der Bedienelemente mit Ausschnitten versehen ist.

6. Einrichtung nach Anspruch 4 oder 5, dadurch gekennzeichnet, daß das Profil (81) einen angrenzenden Rand der Scheibe (1) überdeckt und mittels eines Verriegelungsmechanismus (96) an der Unterkonstruktion (84) festgelegt ist.

7. Einrichtung nach Anspruch 4, dadurch gekennzeichnet, daß das Profil (154) in Längsrichtung verlaufende Führungsnuten (174) aufweist und die Bedienelemente (145) an ihren Rückseiten mit in die Führungsnuten (174) einsetzbaren Führungsstegen (172) versehen sind.

8. Einrichtung nach Anspruch 7, dadurch gekennzeichnet, daß das Profil (154) ein Bestandteil der Unterkonstruktion (148) ist, die auf beiden Seiten des Profils (154) je ein weiteres Profil (152,155) aufweist, von denen das eine (152) an der Rückseite der Scheibe (141) und das andere (155) an der Rückseite eines Schmuckpaneels (144) starr befestigt ist.

9. Einrichtung nach Anspruch 8, dadurch gekennzeichnet, daß die Profile (152,154,155) durch an ihren Längskanten angebrachte Nuten (162) und Vorsprünge (163,164) miteinander verbindbar sind.

10. Einrichtung nach Anspruch 8 oder 9, dadurch gekennzeichnet, daß die weiteren Profile (152,155) mit Haltenasen (175,176) für die Bedienelemente (145) versehen sind.

11. Einrichtung nach Anspruch 4, dadurch gekennzeichnet, daß zwei parallele Profile (45,46 bzw. 45,71) vorgesehen sind, von denen das eine an der Scheibe (1) befestigt und das andere schwenkbar in der Unterkonstruktion (73) gelagert ist.

12. Einrichtung nach Anspruch 11, dadurch gekennzeichnet, daß die beiden Profile (45,46 bzw. 45,71) einander zugewandte, mit den Bedienelementen (4) und/oder der Blende (7) zusammenwirkende, zwischen sich einen Spalt frei lassende Längsränder aufweisen.

13. Einrichtung nach Anspruch 12, dadurch gekennzeichnet, daß die Unterkonstruktion (8,73,84,148) und der Träger (20;92,100;165,197) vollständig innerhalb der äußeren Kontur der Scheibe (1,76,141), des Funktionsbalkens (2,80,117,143), der Profile (45,46,71) und/oder des Schmkuckpaneels (3,144) liegen.

14. Einrichtung nach einem der Ansprüche 1 bis 13, dadurch gekennzeichnet, daß die Unterkonstruktion (8,73,78,84,148) und/oder das Profil (45,46,71) und/oder die Blende (5,7,102,146,147) aus stranggepreßten oder extrudierten od. dgl. und auf eine vorgewählte Länge abgelängten Profilen bestehen.

15. Einrichtung nach einem der Ansprüche 1 bis 14, dadurch gekennzeichnet, daß dem Funktionsbalken (2,143) ein am Träger (20,165) montiertes Gegensprechmodul (48;203,204) und eine Blende (5,146) zugeordnet sind, die im Bereich des Gegensprechmoduls (48;203,204) mit wenigstens einer Schalleintritts- und/oder Schallaustrittsöffnung (6) versehen ist.

16. Einrichtung nach einem der Ansprüche 1 bis 15, dadurch gekennzeichnet, daß der Namensleiste (31,186) wenigstens ein nicht einen direkten Zugriff erforderndes Bauteil (49,195,196) in Form eines Leuchtelements, Spiegels, Bewegungsmelders, Chiplesemoduls oder einer Kamera, einer Uhr oder einer sonstigen Einrichtung zugeordnet ist.

17. Einrichtung nach einem der Ansprüche 1 bis 16, dadurch gekennzeichnet, daß die Scheibe (1,141) auf ihrer Rückseite mit wenigstens einer undurchsichtigen Maske (50,142) versehen ist.

18. Einrichtung nach einem der Ansprüche 1 bis 17, dadurch gekennzeichnet, daß die Unterkonstruktion (148) in einer zur Befestigung an einer Wand (209) od. dgl. bestimmten Wanne (149) montierbar ist, die Mittel (206) zur schwenkbaren Lagerung der Unterkonstruktion (148) aufweist.

19. Einrichtung nach einem der Ansprüche 2 bis 18, dadurch gekennzeichnet, daß ein der Namensleiste (186) zugeordneter Träger (197) schwenkbar an der Unterkonstruktion (145) gelagert ist.
